# EUROPEAN PATENT SPECIFICATION

(11) **EP 3 711 919 B1**
(45) Date of publication and mention of the grant of the patent: **06.01.2021**
(21) Application number: 19163781.8
(22) Date of filing: 19.03.2019
(51) Int. Cl.: B29C 45/14, B29C 45/26, B29C 33/14, B29D 35/06, B29D 35/12, A43B 13/12

(54) **METHOD AND SYSTEM FOR MANUFACTURING A SHOE SOLE WITH A FOIL APPLIED TO THE LATERAL SURFACE OF THE SOLE**
VERFAHREN UND SYSTEM ZUR HERSTELLUNG EINER SCHUHSOHLE MIT EINER FOLIE, DIE AUF DER SEITLICHEN OBERFLÄCHE DER SOHLE AUFGEBRACHT IST
PROCÉDÉ ET SYSTÈME DE FABRICATION D'UNE SEMELLE DE CHAUSSURE AYANT UNE FEUILLE APPLIQUÉE À LA SURFACE LATÉRALE DE LA SEMELLE

(43) Date of publication of application: 23.09.2020
(73) Proprietor: DESMA Schuhmaschinen GmbH, 28832 Achim (DE)
(72) Inventor: Strauß, Adrian, 27374 Visselhövede (DE)
(74) Representative: Hertin und Partner Rechts- und Patentanwälte PartG mbB

(56) References cited:
- EP-A1- 1 398 140
- EP-A2- 2 649 896
- US-A- 3 421 183
- US-A- 5 885 500
- US-A1- 2015 216 258

## Description

The invention relates to the technical field of injection molding, in particular for the manufacture of shoe soles or parts thereof. The invention relates to a method for manufacturing a shoe sole or part thereof, with a foil applied to the lateral surface of the sole. The invention further relates to a shoe, shoe sole or part thereof comprising a foil at least partially covering a lateral part of the shoe, shoe sole or part thereof, manufactured by the method of the invention. The invention further relates to an injection molding form system configured for manufacturing a shoe sole or part thereof comprising a lateral mold frame, an upper closing element, a lower closing element, and a foil and/or means for positioning a foil for covering a lateral surface of a shoe sole or part thereof. The system optionally comprises additionally a collar positioned or configured for positioning around the lower closing element of the system.

### BACKGROUND AND PRIOR ART

Injection molding is a technology commonly used for high-volume manufacturing of items made of thermoplastic or foam material, most commonly thermoplastic polymers. During a typical injection molding process, a molding material, for example a polyurethane foam, is forcefully injected into a mold cavity formed by an injection molding form having a particular cavity shape. The injected molding material is held under pressure in the mold cavity, cooled, and then removed as a solidified part having a shape that essentially duplicates the cavity shape of the mold. Injection molding can preferably be used for the manufacture of shoe soles or parts thereof.

Injection molded shoe soles can be produced very efficiently and exhibit a high quality as well as comfort for the wearer. In order to produce the desired comfort, the shoe sole often encompasses foam of certain properties, preferably comprising a quantity of air contained within the foamed material of the sole in order to increase the damping effect of the sole. As much as it is undesired, some of the resulting pores can also manifest themselves at the lateral, external sides of the soles, not only reducing the aesthetics of the shoe which in the worst case might lead to an increased number of rejects but also representing an entry point for unwanted influences such as dirt or moisture, which can be detrimental to the shoe in the long run.

In addition, bubbles and/or detached parts of the exterior surface of the foamed sole can occur during molding process described in the art. These defects often occur for several reasons. First of all, the cavity is often not closed to 100 %, in particular due to the preferred upper closing element of the cavity in the form of a shoe upper. Therefore, the exterior conditions are never exactly identical, different humidities and temperatures can influence the material and its production quality. Furthermore, different qualities and inhomogeneities can occur throughout the material itself, such that the outcome of the process cannot be controlled to 100 %. This can result in a cavity, which is filled heterogeneously and in particular the skin of the shoe sole (the external surface, preferably the lateral surface of the sole) differs from one product to another.

A further reason for potential defects is the use of a release agent, which is applied on the walls of the cavity prior to injecting the material, in order to enable and/or facilitate demolding as well as to avoid any releasing forces harming the skin of the shoe sole. Very often, the release agent cannot be applied homogenously, which can cause defects to the skin, e.g. since parts of the skin stick to the walls of the cavity after demolding.

Another reason for defects can be the inhomogeneity of temperatures throughout the different parts of the injection molding form and/or also with respect to the injected material. Especially at the interface, these temperature differences can cause defects and uncontrollable reactions.

Very often and only in the case of demolding of the injection molding material or minimal amounts of entrapped air causing uneven surfaces of the produced shoe sole, the defective shoe can only and not necessarily successfully be brought to the desired quality level by elaborate manual post-processing or has to be sold discounted. Products with surface defects usually cannot be sold at all. Such rejects lower the production efficiency and pose a high risk of total loss of the product at a late stage of the production process, which poses a high economical burden to the producer. Furthermore, already the inspection of the product in order to detect eventual defects poses a further manual task, raises the costs of production and is nevertheless error-prone.

But even without the manifestation of defects such as pores, the lateral, external surfaces of the shoe sole are sensitive with respect to wear, dirt, chemical and climatic influences and reduce the aesthetics and longevity of the product.

Additionally, due to the structure of the shoe sole and the material used, the possibilities of designing the lateral surface of a shoe are limited. Often, a varnish or print applied on these surfaces has a limited durability and is easily affected by wear already at an early stage. Attempts to color the material itself, e.g. using differently colored zones within the cavity to produce a multicolor shoe sole often result in color transitions which are not distinct and show color defects due to the reaction profile of the material. Also, the exact adjustment of the material in order to obtain the desired outcome is very elaborate and time consuming.

In order to increase the design possibilities, in particular of the lateral surface of a shoe sole, in order to enhance its aesthetics and to protect the shoe sole and enhance its longevity, it would be desirable to apply a foil, e.g. a foil of synthetic material, such as a polymer, to the lateral side of the shoe sole. Such lateral covering of a shoe sole with foil applied only to the lateral surface is not known in the prior art. Individually designed products are easily and cheaply obtainable with the use of such a lateral foil.

The above-mentioned defects could be easily concealed optically and physically by the use of a lateral foil. A homogenous impression of the lateral surface can be achieved and the protection of the midsole can be improved. In addition, the foil can even help to prevent such defects, e.g. by eliminating any inhomogenously applied release agent on the cavity walls, as the application of any release agent would not be needed at all when using such a foil. The applied foil would preferably not be sticking to the said cavity walls and thus no additional release enabling material would be needed. Furthermore, temperature differences influencing the injected material could be compensated for due to the isolating characteristics of the foil.

Furthermore, other injection molded products could benefit from lateral foil-covering, for example furniture, or parts thereof, such as armrests, outdoor seating, stadium seating or seating in vehicles.

EP2913171 describes the provision of a decoration layer for an injection molded sports item, where the layer has the form of a sheet or film and can be placed in a mold prior to injection of thermoplastic materia Z r EP 1398 140, US 5885 500, US 3421 183 and US 2015/216258 disclose various methods for injecting foam material into a mold cavity in manufacturing a shoe sole or part thereof. The foil covering of a lateral surface of a shoe sole is not disclosed. EP 2649 896 discloses a foil covering a shoe sole to protect the bottom of the midsole and help stabilize the shape of the sole. However, neither production systems or components for laterally foil-covered injection molded objects, in particular shoes, nor corresponding methods of production are known in the prior art. Z

However, neither production systems or components for laterally foil-covered injection molded objects, in particular shoes, nor corresponding methods of production are known in the prior art.

### SUMMARY OF THE INVENTION

An objective of the present invention was to overcome the disadvantages of the prior art. A further object of the present invention was the provision of means for lateral foil-covering of injection molded shoe soles.

The problem is solved by the features of the independent claims. Preferred embodiments of the present invention are provided by the dependent claims.

The invention therefore relates to a method for manufacturing a shoe sole or part thereof, with a foil applied to the lateral surface of the sole, the method comprising:
providing an injection molding form system, said system comprising a lateral mold frame, an upper closing element and a lower closing element,
positioning a foil in the lateral mold frame, by clamping the foil between an upper edge of the lateral mold frame and the upper closing element, and a lower edge of the lateral mold frame and the lower closing element, thereby forming a cavity in the form of a shoe sole or part thereof, in which the foil inside the cavity is held against or in proximity to the inside of the lateral mold frame, and injecting molding material into the cavity.

During a typical injection molding process, an injection molding material is forcefully injected into an injection molding form in a closed position surrounding a cavity having a particular cavity shape. The injected molding material is held under pressure in the mold cavity, cooled, and then removed (demolded) as a solidified product having a shape that essentially duplicates the cavity shape of the mold. Throughout this document, the terms injection molding form system, multi-part injection molding form and injection molding form can be used synonymously.

The injection molding form system comprises a lower closing element. The lower closing element, for example a base plate, is an element of the multi-part injection molding form system which is positioned at the bottom of the form and preferably forms a lower boundary of the cavity in the closed position. It preferably defines the shape of the bottom part of the final molded product. For example, the base plate can be the element forming the bottom part of a shoe and/or a shoe sole in a molding process for the production of shoes and/or shoes soles. In particular, in this case, the base plate can be used as a support for the insertion of an outer shoe sole on top of the base plate. An outer shoe sole is preferably the bottom part of a shoe sole, which provides contact between the ground and the rest of the shoe. Therefore, the outer sole often preferably consists of a particularly durable, weatherproof and/or nonslip material. Preferably, the outer shoe sole features a tread. The surface of the base plate is preferably used for the positioning of the outer sole. Therefore, it preferably replicates the negative form of the bottom of the outer shoe sole (the tread), so that the outer shoe sole fits flush with respect to the base element it is positioned on. In this manner, the bottom of the cavity essentially is bounded by the inserted outer shoe sole and not the base plate itself.

The upper closing element preferably is a closing element closing the cavity from above, e.g. a dummy or a shoe last, preferably comprising a shoe upper. Like this, the complete shoe can be preferably produced in a single process and/or system. The shoe upper preferably closes the cavity material tight from above.

The lateral mold frame preferably forms the lateral part of the cavity when in a closed position. With reference to a produced shoe sole, part of a shoe sole or entire shoe, the lateral mold frame preferably builds the shape of the lateral surface of the shoe, where the foil is to be applied. Therefore, the foil, which is to be applied preferably at least partly, is to be positioned in the lateral mold frame, preferably against the lateral mold frame wall. Preferably, when the injection molding form system is in a closed position and forms the cavity, the lateral mold frame wall comprises the (lateral) cavity wall or cavity walls.

In one embodiment, the lateral mold frame comprises a single element. In other embodiments, the lateral mold frame comprises several elements, which can be brought together in order to form the lateral part of the cavity. It is particularly preferred that the lateral mold frame comprises two elements, referred to herein as the side molding elements.

The upper closing element preferably contacts the foil such that the foil is clamped between it and the lateral mold frame, preferably its upper edge and such that a material tight contact surface between upper closing element and the foil can be created. The upper edge preferably comprises an edge which is particularly shaped to close the mold material tight around the upper closing element and/or for clamping the foil material tight between the upper closing element and the lateral mold frame. This edge is preferably denoted "bite line".

Analogously, the foil will be clamped on its lower part between the lower closing element and the lower edge of lateral mold frame.

In this position, the injection molding form system is preferably in a closed position and forms the cavity. The foil is preferably positioned tight along the cavity wall in order to foil the lateral part of the product, e.g. an (inner) shoe sole. Once the cavity is closed, the injection molding material can be injected, e.g. by a sprue. When the injection molding material is injected in the cavity, it preferably expands and takes the space defined by the surrounding elements. If the foil has still not been positioned with a desirable tightness along the cavity walls, the pressure of the expanding material preferably will apply the appropriate pressure to the foil.

In this way, an efficient and easy method for the application of a foil to the lateral surface of the shoe sole is provided. The foil is positioned simply by clamping it above between lateral mold frame and upper closing element and below between lateral mold frame and lower closing element.

The injection molding form system itself can preferably be a device known to a skilled person or otherwise preferably a device specifically adapted to the method, as described below. Devices and systems for such shoe manufacture, termed direct-soling, are known in the art and are available, for example, from DESMA Schuhmaschinen GmbH, Germany.

Appropriate foils and/or foil materials are known to a person skilled in the art and are also introduced in this document.

In a preferred embodiment of the invention, the upper closing element comprises or consists of a dummy or a shoe last and the lower closing element comprises or consists of a base plate.

The shoe last preferably comprises a shoe upper, which is preferably the part of the shoe covering at least the lateral and the upper part of the foot. It is preferred that the shoe upper, while not comprising the sole, comprises also a bottom part, often preferably of different material and/or texture, preferably comprising a layer between the shoe sole and the foot of the wearer.

In a further preferred embodiment of the invention the foil is positioned in the lateral mold frame when the injection molding form system is in an open position, and closing the injection molding form system into a closed position by lowering the upper closing element and/or raising the lower closing element and closing the lateral mold frame, thereby forming an essentially material tight cavity in the form of a shoe sole or part thereof.

This embodiment preferably relates to a lateral mold frame which comprises several elements, e.g. two side molding elements, wherein in an open position the elements are preferably at a distance to each other and wherein closing the lateral mold frame preferably describes aligning the elements flush to each other so that they are brought together to close the lateral mold frame, forming the lateral part of the cavity.

In a further preferred embodiment of the invention the foil is positioned in the lateral mold frame when the injection molding form system is in an open position, and closing the injection molding form system into a closed position by lowering the upper closing element, closing the lateral mold frame and/or raising the lower closing element, thereby forming an essentially material tight cavity in the form of a shoe sole or part thereof.

This embodiment preferably describes a lateral mold frame which can comprise a single element as well, wherein the step of closing the lateral mold frame is optional and preferably only applies to a lateral mold frame comprising more than one element. In embodiments where the lateral mold frame only comprises a single element, in order to bring the cavity in a closed position, the upper closing element preferably has to be lowered and/or the lower closing element has to be raised in order to bring them together with the lateral mold frame preferably positioned between them, thereby forming an essentially material tight cavity.

In general, the parts comprised in injection molding form system can preferably be moved with respect to each other, such that in an open position parts to be incorporated in the shoe or shoe sole, such as e.g. an outer shoe sole, can be inserted and the foil can be (pre-) positioned. Only in the closed position of the injection molding form system is the foil clamped as described above. The open position can be achieved e.g. by a raised upper closing element and/or a lowered lower closing element with respect to the lateral mold frame. In one embodiment, the lateral mold frame can comprise several, preferably two, side molding elements such that the open position can additionally involve the side molding elements being moved apart from each other laterally.

The closed position is preferably defined by the essentially material tight cavity which is formed by the lateral mold frame, the upper closing element and the lower closing element in this position. Therefore, any other position of the injection molding form system preferably is an open position. An open position e.g. comprises a lowered upper closing element and/or a raised lower closing element with a lateral mold frame (e.g. the side molding elements) being in an open position, not closed to form a lateral part of the cavity. Equally, an open position can for example be represented by a closed lateral mold frame (e.g. consisting of a single element or of two side molding elements brought together) and a raised upper closing element and/or a lowered lower closing element. Preferably, not all elements have to be moveable, but the injection molding system preferably enables both an open position and a closed position by the movement of at least one element.

Closing the injection molding form system preferably comprises a movement of at least one of its elements (e.g. raising, lowering and/or closing of the element(s)), such that a closed position of the injection molding form system is formed.

In order to position and hold the foil prior to closing the injection molding form system, it can be held in an upper region for example by a clamping element above the lateral cavity walls. Then, before closing the cavity, the foil will preferably hang down loosely from the upper region of the side molding elements along the lateral mold frame wall. When the cavity is closed, e.g. by lowering the upper closing element and/or raising the lower closing element such that they approach the lateral mold frame or the side molding elements, which are brought together, the foil will preferably be automatically guided, brought into position and clamped between by the lower edge of the lateral mold frame and the lower closing element. On the upper side, the foil, which is preferably to be held before by some means, is equally clamped between an upper edge of the lateral mold frame and the upper closing element.

Preferably, the foil is not only fixated by the described method, but also contributes to the material tightness of the cavity. It is therefore preferred that the parts of the injection molding form system close essentially flush and material tight with each other with the foil clamped between them in the described manner. The foil preferably acts as a sealing with respect to the material injected inside the cavity, similarly to a silicon or rubber lip provided between lateral mold frame, lower closing element and upper closing element. The foil in its sealing capacity can preferably also prevent injection molding material from covering the lateral parts of the outer shoe sole and/or lateral parts of the shoe upper. In particular some shoe uppers made from textiles preferably soak up injection molding material, preferably due to a capillary effect, which is preferably unwanted. In particular shoe uppers comprising a bottom part can preferably be combined with the shoe sole by direct bonding between a cured injection molding material and the shoe upper, in particular their bottom part. While the bottom part preferably does not exhibit the capillary effect, the rest of the shoe upper is preferably sealed from injection molding material by the foil, preferably preventing the effect and improving the esthetics and functioning of the shoe.

In a further preferred embodiment of the invention the upper closing element comprises or consists of a shoe last and the lower closing element comprises or consists of a base plate, the method comprising:
- positioning an outer shoe sole on the base plate;
- positioning a shoe upper onto the last;
- positioning the foil in the lateral mold frame when the injection molding form system is in an open position;
- closing the injection molding form system into a closed position, thereby forming an essentially material tight cavity in the form of a shoe sole or part thereof, by lowering the last and/or by raising the base plate and then closing the lateral mold frame;
- injecting injection molding material into the cavity;
- curing of the injection molding material; and
- demolding the shoe sole or part thereof by opening the injection molding form system into the open position by opening the lateral mold frame, raising the last and/or lowering the base plate.

This embodiment preferably describes an embodiment where the lateral mold frame comprises more than one element, e.g. two side molding elements, as has been described previously.

In a further preferred embodiment of the invention the upper closing element comprises or consists of a shoe last and the lower closing element comprises or consists of a base plate, the method comprising:
- positioning an outer shoe sole on the base plate;
- positioning a shoe upper onto the last;
- positioning the foil in the lateral mold frame when the injection molding form system is in an open position;
- closing the injection molding form system into a closed position, thereby forming an essentially material tight cavity in the form of a shoe sole or part thereof, by closing the lateral mold frame, by lowering the last and/or by raising the base plate;
- injecting injection molding material into the cavity;
- curing of the injection molding material; and
- demolding the shoe sole or part thereof by opening the injection molding form system into the open position by opening the lateral mold frame, raising the last and/or lowering the base plate.

This embodiment preferably describes an embodiment where the lateral mold frame can also comprise a single element, as has been described previously.

In a further preferred embodiment of the invention, the injection molding form system comprises additionally means for positioning the foil, preferably a clamping element, outside the lateral mold frame, thereby positioning the foil inside the cavity against or in proximity to a lateral mold frame wall.

In a further preferred embodiment of the invention, the injection molding form system additionally comprises a collar,
wherein the collar is positioned or configured for positioning flush around the base plate, such that the collar and the base plate form the lower closing element, and wherein a lower region of the foil is held between the lateral mold frame and the collar when closed to form the cavity.

The collar is preferably used and/or configured for holding the foil between the lateral mold frame and itself, preferably between the lateral mold frame and its exterior surface. The collar is preferably shaped like a "ring" with an interior surface essentially in the outline of the base plate, such that it is positioned or configured for positioning flush around the base plate. The exterior surface of the collar is preferably designed for dragging along the foil and guiding the foil during the closing process, where the foil typically hangs down the cavity wall loosely before this closing process. This facilitates a delicate and wrinkle-free handling of the foil during the closing and clamping mechanism. Lateral mold frame and collar are preferably shaped with respect to each other that the foil can be held or clamped as described. Preferably, lateral mold frame and collar are thus flush with respect to each other when the cavity is closed and the cavity is thus closed material tight in between collar and lateral mold frame

In a further preferred embodiment of the invention, after closing the injection molding form system, the base plate is brought into a first, lower position allowing injection of the injection molding material, wherein the base plate is positioned below a sprue in the lateral mold frame and/or an opening for a sprue in the collar, and
wherein the base plate is subsequently brought into a second, upper position above the sprue and/or the opening for a sprue, for reducing the volume of the cavity to a final shape of the shoe sole or part thereof and stopping the injection of the injection molding material by closing the sprue and/or the opening for a sprue.

It is preferred that the lateral mold frame comprises a sprue for the injection of the injection molding material. The sprue is preferably situated in a lower region of the lateral mold frame, such that it is situated below the base plate in the second upper position. It is further preferred that the collar comprises an opening for a sprue such that, when a collar is used and the sprue is situated as described, injection molding material can still be injected in the cavity when the base plate is in the first position by passing through the opening for a sprue preferably situated in congruency with the sprue. In this preferred embodiment, the sprue and/or the preferred opening for the sprue of the collar, which can preferably just be a slit or a hole, is positioned such that it can be used for injection only during the base plate in the first position. In the second position, when the base plate is preferably flush with the rim, the opening for the sprue preferably does not have a direct connection to the cavity. This can be a very practical and simple way for controlling the injection, for avoiding marks of the sprue on the product and for avoiding a backflow of the injection molding material into the sprue and/or the opening for a sprue.

In this preferred embodiment, the collar and the base plate are mounted to move with respect to each other and are configured for a vertical movement between the described first and second position.

As a further purpose of this embodiment, once the cavity is closed and the injection molding material is injected, there is preferably a further compression step of the injected material by the base plate, which also brings the product into its final form.

It is preferred that the collar is brought into its position by the base plate being brought up into the second, upper position prior to closing the cavity. Preferably, there is a supporting element of the base plate fixated to the base plate, which can be used to support and move the collar together with the base plate, when the base plate is moved upwards above a given height. Then, when the cavity is closed, the collar is preferably held in this position given the flush and tight contact between lateral mold frame, foil and collar, even when the base plate is lowered again into a first position prior to the injection of the injection molding material. It can equally be preferred that the lateral mold frame also comprises a supporting element of the lateral mold frame, which supports the collar when the lateral mold frame is closed around the collar and when the base plate is lowered such that base plate and collar are in a first position. Like this, the collar can preferably be held in a raised position with the foil clamped between collar and lateral mold frame.

As an example, the distance between first and second position can be between 10 mm and 20 mm, preferably about 15 mm.

In a further preferred embodiment of the invention, the foil is thermally activated prior to closing the cavity. The thermal activation can preferably also be used for an activation of the outer shoe sole, making it more flexible and easy to handle and homogenizing its temperature as well as the temperature of all involved elements. Furthermore, the thermal energy can preferably be used in order to clean all involved elements, in particular by burning dirt such as e.g. dust.

In a further preferred embodiment of the invention, at least two ends of the foil are thermally fused before and/or during injecting the injection molding material.

The thermal energy for the fusing can be provided e.g. by heat contained in the mold form from previous production cycles or by an explicit heat source, for example within the lateral mold frame as well as by any exothermic reaction taking place inside the closed cavity, preferably the reaction of polyurethane and isocyanate.

A preferred temperature for fusing can be e.g. between 200 °C and 300 °C, in particular from 240 °C - 260 °C.

In a further preferred embodiment of the invention, the additional step of varnishing or coating the foil by spraying varnish or a coating into the lateral mold frame and/or printing the foil prior to inserting the foil is further comprised.

In a further preferred embodiment of the invention the step of finishing the foil and/or the shoe sole or the part thereof is additionally comprised.

In a further aspect the invention relates to a shoe, comprising a shoe sole or part thereof, said shoe sole comprising a foil at least partially covering one or more lateral parts of the shoe sole or part thereof, manufactured by a method as described herein. The invention therefore relates to a shoe, comprising a shoe sole or part thereof, said shoe sole comprising a foil at least partially covering one or more lateral parts of the shoe, shoe sole or part thereof, manufactured by a method as described herein, wherein the upper edge of the lateral mold frame comprises an edge which is particularly shaped to close the mold material tight around the shoe upper and/or for clamping the foil material tight between the shoe upper and the lateral mold frame, thereby forming a bite line, along which the foil is thermally fused to the shoe upper and the foil is cut or bladed.

The average skilled person recognizes that technical features, definitions and advantages of preferred embodiments of the inventive method also apply for the shoe produced by such a method.

In a further aspect the invention relates to an injection molding form system configured for manufacturing a shoe sole or part thereof according to the method as described herein, comprising a lateral mold frame, an upper closing element, a lower closing element, and a foil and/or means for positioning a foil for covering a lateral surface of a shoe sole or part thereof.

The average skilled person recognizes that technical features, definitions and advantages of preferred embodiments of the inventive method and the shoe produced by such method also apply for the injection molding form system.

In a preferred embodiment of the invention, the lateral mold frame comprises a sprue for injecting injection molding material into a cavity to be formed in the injection molding form system.

In a further preferred embodiment of the invention a collar, preferably as described herein, is further comprised,
wherein the collar is positioned or configured for positioning flush around the base plate, such that the collar and the base plate form the lower closing element, and wherein a lower region of the foil can be held between the lateral mold frame and the collar when closed to form the cavity, and wherein the lateral mold frame is configured for positioning flush around the collar upon closing the lateral mold frame.

In a further preferred embodiment of the invention, the lateral mold frame comprises a recess for the collar, such that the lower region of the lateral mold frame can be positioned flush around the collar and the interior surface of the collar can be positioned flush with the cavity walls and is essentially material-tight with respect to the injection molding material.

In a further preferred embodiment of the invention, the collar comprises
- a smooth and vertical interior surface directly surrounding an open hollow space, wherein the hollow space comprises a vertical height and an outline in the form of an outline of the base plate; wherein the base plate and the collar, especially the hollow space of the collar, are in the form of a shoe and/or a shoe sole,
- an exterior surface, wherein the exterior surface preferably is smoothly curved externally from the rim of the collar to an edge of the collar at the lower transition of the exterior surface to the interior surface and
- a rim at the upper transition of the interior surface to the exterior surface, wherein the rim preferably comprises an even surface, which is preferably horizontal, and a rounded transition between the even surface and the exterior surface.

In a further preferred embodiment of the invention, the foil can be held between the rim of the collar and an upper edge of the recess of the lateral mold frame, and wherein the upper edge of the recess of the lateral mold frame comprises a second even surface preferably parallel to the even surface of the rim.

In a further preferred embodiment of the invention, the collar and the base plate are mounted or configured for mounting to move with respect to each other and are configured for a vertical movement between a first and a second position,
wherein in the first position, a distance between the rim of the collar and the base plate is maximal, preferably for injection of an injection molding material, and
wherein in the second position the distance between the rim of the collar and the base plate is minimal, wherein the rim and the base plate are preferably flush.

In a further preferred embodiment of the invention, the collar comprises an opening for a sprue, preferably at the rim of the collar, and wherein the opening for a sprue is situated between the rim of the collar and the base plate, when the collar and the base plate are in the first position.

In a further preferred embodiment of the invention, a device for thermally activating the foil and/or an inserted element placed inside the form system, preferably a heater and/or a lamp, is further comprised.

In a further preferred embodiment of the invention, the injection molding form system comprises additionally means for positioning the foil, preferably a clamping element, outside the lateral mold frame, thereby positioning the foil inside the cavity against or in proximity to a lateral mold frame wall.

In a further preferred embodiment of the invention, at least one roll-off device configured for holding a roll of foil and a blade, wherein the roll-off device and the blade are configured to automatically unroll the roll of foil at least partially, to automatically cut the foil and position the foil in the lateral mold in the open position, is further comprised.

In a further preferred embodiment of the invention, a printing device for printing upon the foil, preferably by laser printing, non-impact-printing and/or tampography is further comprised.

In a further preferred embodiment of the invention, the lateral mold frame comprises additionally a clamping element, comprising
a first opposing part of a clamping element, preferably at least one ridge, elongated protrusion and a first element of a hinge, for positioning a foil inside the lateral mold frame against the cavity wall and
a second opposing part of a clamping element for positioning against the first opposing part,
wherein the clamping element is configured for clamping the foil in a pre-determined position inside the lateral mold frame against the cavity wall and wherein the second opposing part of a clamping element preferably comprises a second element of a hinge.

In a further preferred embodiment of the invention, the first opposing part of a clamping element is positioned in an upper region of the lateral mold frame and is configured to contact an upper region of the foil, allowing the foil to hang against the cavity wall when clamped.

In a further preferred embodiment of the invention, the first opposing part of a clamping element and the second opposing part of a clamping element are configured for a relative movement between a first position and a second position, wherein in the first position a foil can be inserted between the first opposing part and the second opposing part, and wherein in the second position the upper region of the foil is held at least partially between the first opposing part and the second opposing part.

In a further preferred embodiment of the invention, the lateral mold frame comprises at least two closable side molding elements, each preferably comprising a first opposing part of a clamping element for positioning a foil.

### Embodiments relating to the collar:

In a further preferred embodiment of the invention, a collar for a base plate of a multi-part injection molding form is provided, wherein the collar is configured to be positioned flush around the base plate and comprises:
- a smooth vertical interior surface directly surrounding an open hollow space, wherein the hollow space comprises a vertical height and an outline in the form of an outline of the base plate;
- an exterior surface and
- a rim at the upper transition of the interior surface to the exterior surface.

The comprised elements, comprising the interior surface, the exterior surface and the rim is preferably referred to as lateral surface of the collar. In one embodiment, the invention therefore relates to a collar configured for positioning around a base plate of a multi-part injection molding form, wherein the collar is configured to be positioned flush around the base plate, such that vertical movement of the base plate and/or collar relative to each other is enabled, wherein the collar comprises a lateral surface, comprising:
- a smooth and evenly vertical interior surface (the inner face of the ring), thereby enabling relative vertical movement between the collar and base plate, the lateral surface directly surrounding an open hollow space, for example forming a ring around the base plate, wherein the collar exhibits a vertical height and is configured to form an outline in the form of the outer edge of the base plate;
- an exterior surface (the outer surface of the ring), and
- a rim at the upper transition between the interior surface to the exterior surface, such that for example the interior and exterior surfaces of the collar preferably do not evenly transition from interior to exterior surface via an even curve, but that a rim (ridge, protrusion) is positioned at the upper transition.

While the collar is a device in itself, its preferred use is in conjunction with and/or being comprised in an injection molding form, in particular together with a base plate of the injection molding form, which is useful for understanding the features of the collar. Therefore, in the following, the context of the collar's use is preferably explained with respect to the interaction of the collar and said other elements.

The features of the collar are preferably adapted for said base plate and injection molding form, which themselves can be devices known to a skilled person. During a typical injection molding process, an injection molding material is forcefully injected into an injection molding form surrounding a cavity having a particular cavity shape. The injected molding material is held under pressure in the mold cavity, cooled, and then removed (demolded) as a solidified product having a shape that essentially duplicates the cavity shape of the mold.

In one embodiment, the injection molding form is a multi-part injection molding form, comprising preferably at least two parts, which can be moved with respect to each other between an open and a closed position. In the closed position, the cavity is formed by the surrounding parts or elements of the multi-part injection form. In the closed position, the injection process takes place. The open position is preferably used for removing the solidified product, a process synonymously called demolding.

In some embodiments, the open position of the form can preferably further be used to position additional elements within the form, which shall be integrated into the product, such as inserts, an outer shoe sole and/or a foil covering the outside surface of the injection molded product at least partially. Preferably, the multi-part injection molding form comprises preferably at least 2 parts, more preferably at least 3 parts, even more preferably of at least 4 parts and most preferably of at least 5 parts. Also, at least 6, 7, 8, 9, 10, 15 or 20 parts are preferably comprised.

In one embodiment, a base plate is comprised in the multi-part injection molding form. A base plate preferably is an element of the multi-part injection molding form which is positioned at the bottom of the form and preferably forms a lower boundary of the cavity in the closed position. It preferably defines the shape of the bottom part of the final molded product. For example, the base plate can be the element forming the bottom part of a shoe and/or a shoe sole in a molding process for the production of shoes and/or shoe soles. In particular, in this case, the base plate can be used as a support for the insertion of an outer shoe sole on top of the base plate. An outer shoe sole is preferably the bottom part of a shoe sole, which provides contact between the ground and the rest of the shoe. Therefore, the outer sole often preferably consists of a particularly durable, weatherproof and/or nonslip material. Preferably, the outer shoe sole features a tread. The surface of the base plate is preferably used for the positioning of the outer sole. Therefore, it preferably replicates the negative form of the bottom of the outer shoe sole (the tread), so that the outer shoe sole fits flush with respect to the base element it is positioned on. In this manner, the bottom of the cavity essentially is bounded by the inserted outer shoe sole and not the base plate itself.

The collar for a base plate of a multi-part injection molding form preferably forms a unit together with the base plate. While both preferably are separate parts which are individually movable, the collar is preferably positioned flush around the base plate in the open and the closed position of the multi-part injection molding form.

The collar is configured to be positioned flush around the base plate. This preferably means that the collar comprises a hollow space, which is open at least partly, in which the base plate can be positioned such that the outline of the base plate essentially coincides with the surrounding surface of the collar. In some embodiments, it can also be preferred that an outer shoe sole, for which the collar can be equally configured, essentially coincides with the surrounding surface of the collar. The hollow space is at least partially open, which means preferably that it is at least open on the side where the base element faces the rest of the cavity of the multi-part injection molding form in a closed position.

In some embodiments, the collar comprises a lateral surface, which preferably comprises an interior surface surrounding the hollow space and an exterior surface separated by a certain thickness to the interior surface, which defines preferably the thickness of the lateral surface. Preferably, the hollow space is essentially formed by the interior surface, which surrounds it laterally. The interior surface preferably comprises a certain vertical height, which essentially defines the vertical height of the hollow space and is formed around the lateral side of the hollow space, forming the outline of the base plate it is configured for.

The interior surface features an evenly vertical surface, such that the collar can be positioned flush around the preferably rigid base plate over the complete vertical height of the hollow space.

In some embodiments, the interior surface is smooth. This preferably means:
1. frictional forces between the base element and/or an element placed on the base element, such as the outer sole for example, shall be minimized. A person skilled in the art knows which materials to choose and/or how to treat the inner surface in order to achieve this.
2. the inner surface essentially does not feature pores and/or holes in which an injection molding material, such as a (inner) shoe sole material, can be introduced and/or deposited.

The collar comprises a rim, such as a ridge or protrusion, at the upper transition of the interior surface to the exterior surface. The rim thus preferably forms the upper side of the collar. The thickness of the lateral surface preferably does not need to be constant neither with respect to a vertical direction nor on different sides of the collar. Therefore, the width of the rim does preferably not have to be constant either.

Directional cues, such as up, down, upper, lower, bottom or top are preferably defined essentially with respect to the direction of gravity of the earth, such that "up" is defined essentially in the opposite direction of the direction of gravity and/or where the ground with respect to gravity is situated. It can also be preferred that "up" is defined with respect to the position of the cavity, which can be formed by the multi-part injection molding form, such that a directional cue referring to an "upwards direction", for example of the base element and/or the collar, points in direction of the cavity. Preferably, both definitions coincide and e.g. a base element and/or a collar is positioned on the bottom of such a cavity with respect to the direction of gravity.

To illustrate more clearly the purpose and the structure of the collar, an illustrating example focused on the production of an injection molded shoe and/or shoe sole shall be given in the following without limiting the invention to this example.

The example illustrates the interaction of the collar, the base plate and two side molding elements schematically, wherein these elements together preferably essentially form the bottom and one lateral side of a multi-part injection molding form. In this example, a pre-manufactured outer shoe sole can be inserted in the form when it is in the open position, by putting the outer shoe sole on the base plate, which is positioned inside the hollow space formed by the collar and surrounded flush by the collar's interior surface.

The base plate is preferably movable for the illustrated production process, wherein in a first position, the base plate is in its lower position within the vertical expansion (vertical height) of the hollow space inside the collar. In this position, a distance between the base plate and the (upper) rim of the collar is maximal. The hollow space thus preferably is configured for the movement of the base plate between the first and a second position.

An important feature of the collar is to facilitate the lateral foil-covering of the (inner) shoe sole to be formed. Therefore, foils are preferably inserted in each side molding element such that it hangs down the (lateral) cavity wall of each side molding element. The foil can preferably be positioned and held in an upper region by a clamping element, e.g. a hinge, which is situated on the upper region of each side molding element.

For the production of the injection molded shoe sole, by injecting suitable (inner) shoe sole material, the multi-part injection molding form is closed by a relative movement between the collar comprising the base plate within its hollow space and the side molding elements, bringing these elements together. Before closing, the foil can preferably be activated, for example by heating. Through activation, the foil preferably becomes more flexible and easy to handle. When closing the multi-part injection molding form, the lower part of each side molding element closes flush around the collar, preferably its exterior surface. The exterior surface of the collar drags along the foil and guides the foil during the closing process, which typically hangs down the cavity wall loosely before closing.

In some embodiments, during a process of foil-covering, the foil will be clamped on its lower part between the exterior surface of the collar and the surrounding lower parts of the lateral molding elements. Now the injection molding material is injected in the cavity, where it expands and takes the space defined by the surrounding elements. Preferably, the cavity therefore is closed from the top by an additional upper closing element and preferably from the sides by the lateral mold frames, in particular in embodiments where the lateral mold frame comprises more than one element, e.g. two side molding elements. By this, the foil is preferably clamped above between the upper closing element and the lateral mold frame. Due to the clamping, the cavity is preferably closed material tight with respect to the injection molding material. At the end of this process, the base plate is moved in the upper second position, which is flush with the rim of the collar. During this step, the shoe sole material can be preferably further compressed and is brought into its actual form of a shoe sole, given by the base plate and the outer shoe sole being laid out on it, the (lateral) cavity walls of the side molding elements forming the lateral mold frame and preferably the upper closing element. Once the molded material has set and demolding takes place by opening of the form, a complete shoe is thus produced with a shoe upper directly attached to the shoe sole, comprising an outer shoe sole and a laterally foil-covered midsole.

One advantage of the collar is the facilitation of material tight movement of the base plate between the first and the second position. It is often necessary to further compress the injected material within an injection molding process, e.g. since it loses volume when it is cooling down after injection. This can be achieved by the movable base plate. Furthermore, the moving of the base plate from the first position into the second position is preferably further used to close the sprue and/or opening for the sprue through which the material is injected into the closed cavity. While moving in upward direction the base plate closes the sprue and/or the opening for a sprue in order to avoid any material / inside cavity pressure evaporating from the closed cavity. Within the given embodiment the base plate in its second position and the collar closes the sprue and/or the opening for a sprue to prevent the before said.

Using technology of the prior art it is however complicated to achieve a further compression for a cavity which is already closed. By moving the base element within the collar, this can be achieved more easily. Furthermore, moving the base element causes friction between the base plate and/or the outer shoe sole and the collar, therefore causing wear of the collar. Having thus a separate, interchangeable element like the collar simplifies maintenance considerably and reduces costs.

Another advantage of the collar is the simple and efficient (lateral) foil-covering of the produced component, e.g. a shoe sole. The lateral foil-covering of a shoe sole can be achieved by positioning a foil inside the lateral mold frame, e.g. the side molding elements of the lateral mold frame, against their cavity walls.

The foil can be positioned and held in an upper region by a clamping element above the lateral cavity walls, e.g. a hinge. Before closing both side molding elements around the collar to form a cavity, the foil will hang down loosely from the upper region of the side molding elements along the cavity wall. When the side molding elements are approximated to the collar and closed around the collar to form the cavity, where the bottom region of the side molding elements closes flush around the collar, the foil will be automatically guided and brought into position by the exterior surface of the collar, wherein the exterior surface preferably is shaped accordingly.

The foil can then preferably be clamped below the lateral cavity walls, between the side molding elements and the exterior surface of the collar, whereas the upper part of the foil is fixed by the clamping element above the lateral cavity walls before closing the cavity and clamped by the upper closing element and the lateral mold frame/side molding elements when the cavity is closed. By the closing movement and in some embodiments some frictional force between the exterior surface of the collar and the lower part of the side molding elements, the foil is at the same time preferably brought under some tension, whereas before it was hanging down loosely as caused by gravity. To support preferred frictional forces between foil and exterior surface and to support the desired behavior of the foil, the exterior surface of the collar can be formed appropriately and can preferably be roughened. The foil can also be activated by application of heat beforehand, in order to make the foil more soft and flexible.

Appropriate foils and/or foil materials are known to a person skilled in the art and are also introduced below. Thus, in the closed position, the foil is preferably positioned tight along the cavity walls in order to foil the lateral part of the product, e.g. a midsole. Once the cavity is closed (there can be an additional upper closing element to close the cavity from above, e.g. a dummy or a shoe last), the injection molding material can be injected, e.g. by a sprue. If the foil has still not been positioned with a desirable tightness along the cavity walls, the pressure of the expanding material will apply the appropriate pressure to the foil. The injection material is preferably further compressed by an upwards movement of the base plate, until the base plate is positioned flush with the rim of the collar. In this position, the cavity is preferably formed essentially of the base plate from below, the cavity walls of the side molding elements laterally (which are covered by the foil) and the preferred upper closing element from above. The compressing movement of the base plate preferably also counteracts a possible recollapsing of the injection molding material during its drying process. Once the material has cured and has adopted its final shape, the cavity can be opened for demolding.

Preferably, curing means that the reactive profile of the material flattens and the foam and/or material has reached its final volume.

In this way, by using the collar, the injection molding process and in particular maintenance of the injection molding form can be simplified. The process becomes more cost effective and reliable with respect to reduced anomalies during production. In particular, lateral foil-covering of an injection molded product can be accomplished in a surprisingly simple and efficient manner. Accidental wrinkling and folding of the foil when closing the form in order to build the cavity can be prevented, surprisingly, employing the collar described herein.

In some embodiments, the collar comprises or consists of synthetic materials, polymers, plastics, and the like. Such a collar can be easily and efficiently produced, for example by additive manufacturing such as 3D printing. In some embodiments, the collar comprises or consists of metal, such as aluminum or steel. Such a collar is robust and physically well suited for the injection molding process. In some embodiments, the collar comprises or consists of ceramics, which can have advantageous thermal characteristics and a high longevity.

In a preferred embodiment of the invention, the rim comprises an even surface, which is preferably horizontal, and a rounded transition between the even surface and the exterior surface. The rim separates the interior surface on the inner side of the collar from the exterior surface on its outer side. The rim of this preferred embodiment features an even surface outlining the collar on the upper side. The term "even surface" preferably means that a constant angle between the surface and the vertical interior surface is featured throughout the surface. This even surface can preferably be used in conjunction with a fitting even surface of the lateral mold frame, e.g. the side molding elements, to clamp the foil between both surfaces.

In some embodiments, the cavity walls of the lateral mold frame are preferably delimited from below by said fitting surface. Therefore, the foil, which hangs down the cavity walls from above, can be fixated efficiently below the cavity walls by the even surface of the collar and said fitting surface of the lateral mold frame, which are preferably flush in the closed position.

In some embodiments, the even surface is preferably essentially horizontal. This means preferably that it features an angle of essentially 90 ° with respect to the vertical interior surface of the collar. This simplifies the fabrication and the exact fitting of the even surface with its said fitting surface of the lateral mold frame.

In some embodiments, it can also be preferred that the angle between the vertical surface and the even surface is smaller than 90 °. This way, the fixation of the foil by the even surface and said fitting surface of the lateral mold frame can be improved. In some embodiments, it is preferred that the angle between the vertical interior surface and the even surface is larger than 90 °. In this way, there is less tension on the foil and the foil is less sharply kinked, such that the danger of accidentally breaking the foil can be reduced. Therefore, it can also be preferred that the edge between the vertical inner surface and the even surface is rounded.

It is also preferred that there is a rounded transition between the even surface and the exterior surface, such that the foil is not exposed to a sharp edge between the even surface and the exterior surface. In this way, breaking of the foil can be prevented in a surprisingly easy manner.

In another preferred embodiment, the surface of the rim is not even but rounded such that the angle between it and the vertical interior surface is raised gradually with increasing distance of the considered point of the rim to the interior surface of the foil. In this way, sharp kinking of the foil can be prevented, the foil can be guided smoothly and the protection from breaking the foil can be improved.

In all these embodiments of the rim, it is preferred that the lateral mold frame features a fitting counter-surface, which are positioned flush with respect to each other in a closed position of the form and such that both surfaces are configured to clamp the foil between them.

In a further preferred embodiment of the invention, the exterior surface is smoothly curved externally from the rim of the collar to an edge of the collar at the lower transition of the exterior surface to the interior surface. The collar preferably features a transition separating the exterior surface and the interior surface at the bottom of the collar. The transition is preferably called 'edge'.

In this embodiment, it is preferred that the exterior surface is smoothly curved externally between the rim and the edge. It is thus preferred, that in a vertical cross section of the collar, an angle between a tangent to the exterior surface and the vertical interior surface increases gradually from the top of the exterior surface to the bottom, at least in a region of the exterior surface, preferably an upper region. In this embodiment, the bottom part of the foil, hanging preferably loosely from above and along the cavity walls, can be contacted and guided smoothly by the exterior surface when closing the cavity.

When considering a vertical cross section of the closed form when forming the cavity, there is preferably a smooth and/or flush transition between the cavity wall(s) of the lateral and the interior surface of the collar, whereas the exterior surface extends more broadly than the cavity walls. Thus, when closing the cavity, there is a moment the exterior surface comes into contact with the foil hanging along the cavity wall and preferably further extending below the walls and hanging straight down (due to gravity) below the cavity wall. This moment preferably comes before the cavity is entirely closed. By the preferred shape of the exterior surface, during this moment of contact, the foil is not subjected to a sharp edge and the contact surface between foil and exterior surface is gradually increased during the closing process, thus preferably also only gradually increasing the frictional force between foil and surface until a preferably large region of the exterior surface makes contact with the foil. In this way, there is no abrupt force exerted on the foil by the exterior surface when closing the form, thus protecting the foil from breaking, while at the same time the frictional force can be eventually big enough to put the foil under tension and to stretch it along the cavity wall such that it preferably essentially mimics the shape of the cavity wall.

In a further preferred embodiment of the invention, the collar comprises an opening for a sprue, in some embodiments preferably at the rim of the collar. It is preferred to use a sprue for injecting the injection mold material into the cavity. This sprue is preferably part of the injection molding form, e.g. the lateral mold frame and/or the side molding elements. It can be preferred that injection of the material essentially takes place into a part of the hollow space of the collar, where the base plate is situated and wherein the base plate is preferably positioned in a low (first) position within the collar. In this manner, the hollow space of the collar is at least partly part of the cavity. The location of injection (the sprue/opening for a sprue) is then preferably above the base plate. This injection into the hollow space with a base plate in the bottom position can be practical for example to avoid injection marks on the surface of final product at the location the sprue has been situated. In order for the sprue to inject material into the part of the hollow space, the collar thus preferably comprises an opening for the sprue in this embodiment. Preferably, the opening is situated appropriately in order to be superimposed with the sprue of the injection molding form when the molding form is closed.

### Embodiments relating to the injection molding form system:

In a further preferred embodiment of the invention, the injection molding form system, comprises a collar according to preceding description and a base plate, wherein the collar is positioned or configured for positioning flush around the base plate, wherein the collar and the base plate are mounted or configured for mounting to move with respect to each other and are configured for a vertical movement between a first and a second position.

In some embodiments, in the first position, a distance between the rim of the collar and the base plate is maximal, preferably for injection of an injection molding material, and in the second position the distance between the upper rim of the collar and the base plate is minimal, wherein the rim and the base plate are preferably flush.

This preferred embodiment for use or configuration of the collar, comprising the collar as described herein, but also optionally further parts of the multi-part injection molding form, in particular the base plate. By this embodiment of the invention, synergies can be created, since the features not only of the collar but also of the base plate are within the scope. While the collar itself covers an embodiment of the invention, the present disclosure encompasses such further embodiments of the invention featured by a more extensive or a complete system, preferably improving the effects of the collar. The invention further relates to a kit comprising the components of the system, for example in proximity to each other or provided in relation to each other, for example without necessarily being assembled into said system.

In some embodiments, the system comprises a base plate. The principal functioning of the base plate has been explained previously. The base plate is a main formative element defining the form of the product resulting from injection molding, preferably defining one side/surface of the product, in particular the bottom side/surface. For example, the base plate can be a principal forming element for the production of a shoe and/or a shoe sole, defining the outer sole (the bottom of the shoe). It is then preferred that the base plate features the outline of a shoe (sole) and preferably also a shape acting as a counter part to the bottom tread of the outer shoe sole.

The outer shoe sole can for example be made of a rubber and/or a synthetic material, such as a polymer, and is inserted in the molding form system prior to the injection molding process, preferably by putting it onto the base plate. The counter part of the shoe sole preferably refers to a negative to the profile or tread of the preferred shoe sole, such that the shoe sole fits flush when it is correctly positioned on the base plate. In this example for the manufacture of shoe soles, it is also clear to a person skilled in the art that for different shoes and/or different sizes of shoes, differently shaped and/or dimensioned base plates and thus also collars preferably have to be used.

In this preferred embodiment, the collar and the base plate are mounted to move with respect to each other and are configured for a vertical movement between a first and a second position. The general purpose of this has been explained previously when the functioning of the collar has been described: once the cavity is closed and the injection molding material is injected, there is preferably a further compression step of the injected material by the base plate, which also brings the product into its final form. Also, a sprue and/or an opening for a sprue can be closed by this movement. For this purpose, the vertical movement preferably takes place between first and second position. In the first position, a distance between the rim of the collar and the base plate preferably is maximal. The first position is preferably along the vertical height of the hollow space, preferably somewhere between the rim and the edge of the collar. This position is preferably used for injection of an injection molding material. In this position, the base plate preferably can be found on a bottom part of the collar. In the second position, the distance between the upper rim of the collar and the base plate preferably is minimal, wherein the rim and the base plate are preferably flush, thus there is preferably essentially no distance. Whereas in the first position, the part of the hollow space of the collar above the base plate is part of the cavity on its bottom, this is preferably not the case for the second position, where the cavity is bound by the base plate and/or the outer shoe sole placed on the base plate placed on top of the hollow space, flush with the rim.

To seal the contact area between base plate and interior surface and/or rim of the collar and to make it material tight with respect to injection molding material, a non-stick material, e.g. Teflon or similar material can preferably be used at the edge of the base plate and/or the interior surface and/or rim of the collar.

In a preferred embodiment of the invention, the collar comprises the opening for a sprue between the rim of the collar and the base plate, when the collar and the base plate are in the first position. In this preferred embodiment, the opening for the sprue, which can preferably just be a slit or a hole, is positioned such that it can be used for injection only during the base plate in the first position. In the second position, when the base plate is preferably flush with the rim, the opening for the sprue preferably does not have a direct connection to the cavity. This can be a very practical and simple way for controlling the injection, for avoiding injection marks of the sprue on the product and the backflow of injection molding material. In a preferred and very simple embodiment, the opening is a vertical slit extending from the rim.

In a further preferred embodiment of the invention, the injection molding form system further comprises a lateral mold frame, wherein a cavity is formed by the lateral mold frame positioned around the collar, the collar and the base plate thereby forming the base of the cavity and the lateral mold frame forming the cavity walls, and wherein the lateral mold frame comprises a first opposing part of a clamping element for positioning a foil inside the lateral mold frame against the cavity wall. The general setup of this preferred embodiment, with the cavity formed by the lateral mold frame (and/or comprised side molding elements) has been illustrated previously.

In some embodiments, it is preferred that the system, preferably the lateral mold frame, comprises a clamping element, in particular a first opposing part of a clamping element. The clamping element preferably comprises or consists of at least two opposing parts for clamping the foil, which preferably exert a force on one another and preferably on the foil situated between them. The clamping element preferably is situated above the cavity wall, such that the foil can be fixed above the wall. This embodiment supplies a simple and efficient means for clamping the foil. It is preferred that the cavity wall or cavity walls, which is synonymous for the lateral cavity wall or walls, is structured in order to design the lateral surface of the molded object. As has been said, the cavity walls and the base element as well as a preferred upper closing element of the cavity surround the cavity and thus define its shape, whereas the injection molded product essentially takes the shape of the cavity. Therefore, any structure on the cavity walls preferably contributes to the structure and/or design of the exterior surface of the object. For example, when a lateral shoe sole is produced, the lateral surface of the shoe sole can exhibit a structure for design and/or functional purposes. This structure is essentially shaped by the shape and/or structure of the cavity wall.

In a further preferred embodiment of the invention, the first opposing part of the clamping element comprises at least one ridge, elongated protrusion and or a first element of a hinge configured to position the foil. With a ridge or elongated protrusion, the foil can be easily located and at the same time fixed, the ridge or elongated protrusion providing a very simple means to exert frictional force on the foil in conjunction with the second opposing part of the clamping element, which preferably is a counterpart which can be fixated against the first opposing part. In a preferred embodiment, the first opposing part is a first element of a hinge. This preferably means that together with the second opposing part, a complete hinge is provided. Preferably, the first element of the hinge is a leaf of the hinge. The hinge can be a suitable and simple element in order to clamp the foil against the lateral mold frame. The foil preferably is clamped between the at least two leaves of the hinge. The clamping force holding together the two leaves can preferably be gravity, a force exerted by a spring comprised in the hinge and/or a force provided by a motor and/or hydraulically. A hinge as a clamping element is particularly simple to use also in automated processes and therefore is very well suited for mass production of injection molded products.

In a further preferred embodiment of the invention, the form comprises additionally a second opposing part of a clamping element for positioning against the first opposing part, wherein the clamping element is configured for clamping the foil in a pre-determined position inside the lateral mold frame against the cavity wall and wherein the second opposing part of a clamping element preferably comprises a second element of a hinge. The second opposing part of the clamping element preferably is used to exert a force on the first opposing part and also on the foil situated between both opposing parts in order to clamp it in a pre-determined position. In order to fulfil its preferred purpose, to clamp the foil inside the lateral frame against the cavity wall, the first opposing part of the clamping element preferably is situated on the lateral mold frame above the cavity wall, such that, when the foil is clamped, it can hang down the cavity wall through the force of gravity. Whereas the first opposing part of the clamping element preferably is a fixed element of the lateral mold frame, the second opposing part of the clamping element preferably is a detachable element, which in particular can be fixed on the first opposing part for example due to its form, which preferably is adapted to the first opposing part. For example, the second opposing part can be plugged on the first opposing part. The first opposing part can preferably constitute the male part of the plug and the second opposing part the female part or vice versa. In a preferred embodiment, the second opposing part of the clamping element comprises a second element of a hinge, for example a second leaf of a hinge, whereas the first opposing part is a first leaf of a hinge. In this case, the foil preferably is clamped between the leaves. Also, the first opposing part of the clamping element comprising a hinge can be a surface of the lateral mold frame, whereas the second opposing part of the clamping element comprises a knuckle, a pin inside the knuckle and/or a leaf preferably for clamping the foil between leaf and surface. When the clamping element is a hinge, the second opposing part preferably is not detachable but connected to the lateral mold frame by pin and/or knuckle. In this way, a very simple and in particular automatically operable clamping element can be realized.

In a further preferred embodiment of the invention, the first opposing part of a clamping element is positioned in an upper region of the lateral mold frame and is configured to contact an upper region of the foil, allowing the foil to hang against the cavity wall when clamped. The foil preferably is not an endless foil but a sheet of foil, which is fixated in the clamping element in its upper region, the rest of the foil sheet preferably hanging down the cavity walls. This is a particularly simple clamping mechanism, which requires little maintenance.

In a further preferred embodiment of the invention, the lateral mold frame and the collar are configured to close a lower region of the lateral mold frame flush around the collar, wherein a lower region of the foil is held between the lateral mold frame and the collar when closed to form the cavity, wherein the cavity is material-tight with respect to injection molding material. In this embodiment, it is preferred that not only the collar is adapted in its shape with respect to the lateral mold frame, but also that the mold frame is adapted with respect to the collar.

Due to this, the shapes of both elements can preferably be optimized in order to achieve that the foil is held between the lateral mold frame and the collar when closed to form the cavity. It can also be preferred that just the collar is adapted with respect to the lateral mold frame in this embodiment. The lateral mold frame preferably can be separated into an upper region with inner walls preferably representing the cavity walls when closed to form the cavity and preferably also accommodating the clamping element above the cavity wall, and a lower region. The lower region preferably does not form part of the cavity, but closes flush and preferably material tight around the collar, in particular the exterior surface of the collar. Like this, the cavity can be sealed with respect to injection molding material at the intersection of lateral mold frame and collar. Material tightness is a preferred characteristic of the injection molding cavity. It is particularly preferred that the lower part of the lateral mold frame closes flush and material tight around the collar when a foil is situated between the lower part of the lateral mold frame and the collar, in particular the exterior surface of the collar. The foil, as has been explained previously, is preferably used to laterally foil an injection molded product, e.g. the midsole of a shoe. Therefore, it preferably hangs down the cavity wall(s) of the lateral mold frame, preferably fixated from above by the clamping element. Below the cavity wall, the foil shall preferably also be fixated, so it can be well fixated within the cavity in order to achieve a reproducible process of foil-covering. This is preferably achieved by clamping the foil between the lower part of the lateral mold frame and the exterior surface of the collar and the upper part of the mold frame and the upper closing element. In this way, it can be achieved that the complete lateral part of the molded product can be foil-covered. The edges of the foil touching the product are preferably material tight during the injection molding process. Like this, the edges can be created in a very clean, functional and/or aesthetic manner. The overhanging foil of the final, which has been used for clamping above and below the cavity wall, can be preferably be removed after the injection molding.

Lower part of the lateral mold frame preferably comprises the lower edge of the lateral mold frame. Upper part of the lateral mold frame preferably comprises the upper edge of the lateral mold frame.

It is thus preferred, that the lateral mold frame can be closed flush and material tight with respect to the injection molding material with and without foil. For this, it is preferred that the surfaces of the lower part of the lateral mold frame and the exterior surface of the collar coincide and contact tightly when the form is closed, in particular at the edges which are formed with the cavity walls of the lateral mold frame. When the foil is used, it is preferable that the foil is not wrinkled and that it is itself thin and has some elastic and/or sealing qualities. A skilled person knows what kind of foil can be chosen in order to achieve this. The whole system preferably has a certain flexibility in order to close tight with respect to material with and without foil. The forces used to bring together the system to form the cavity should be adequate. A skilled person knows how to achieve this. With this embodiment, an improved molded and preferably laterally foil-covered product of high quality can be realized.

In a further preferred embodiment of the invention, the lateral mold frame comprises a recess for the collar such that the lower region of the lateral mold frame can be positioned flush around the collar and the interior surface of the collar can be positioned flush with the cavity walls and material-tight with respect to injection molding material. The recess is preferably situated below the cavity wall and is preferably formed such that it reproduces an adverse or 'negative' of the lateral surface of the collar, where the exterior surface of the collar is flush with the lower region of the lateral mold frame. At the same time, the interior surface of the collar and the cavity walls are preferably adapted with respect to each other such that they are flush as well at their contacting surface. At the edge where the interior surface of the collar and the cavity wall of the lateral mold frame contact, there is preferably material tightness with respect to injection molding material. When the foil is inserted in the closed cavity, the foil preferably is guided outside the cavity and along the exterior surface of the collar through this contact area. In this case, material tightness is also preferred. When the cavity is formed, it can preferably be changed in volume due to the vertical movement of the base plate within the open hollow space of the collar. During the injection molding process, the base plate is preferably moved until it is situated in the second position, where it is flush with the rim. Like this, the injection molding material is preferably compressed and brought into its final shape. In this way, an improved and optimized form system for injection molding and lateral foil-covering can be achieved.

In a further preferred embodiment of the invention, the foil can be held between the rim of the collar and an upper edge of the recess of the lateral mold frame, and the upper edge of the recess of the lateral mold frame comprises a second even surface preferably parallel to the even surface of the rim. This embodiment has been illustrated previously when describing the surface of the rim of the collar. It is thus preferred that the recess of the lateral mold frame comprises at its top position a surface which is preferably identically shaped to the surface of the rim of the collar, such that both surfaces contact flush when the form is in closed position. In this way, the foil can be guided and/or clamped between both surfaces at the same time very smoothly and with enough contact surfaces to hold the foil tight and keep the contact surfaces material tight with respect to injection molding material.

In a further preferred embodiment of the invention, the lateral mold frame comprises at least two closable side molding elements, each comprising a first opposing part of a clamping element for positioning a foil. In this embodiment, the lateral mold frame is preferably divided into two halves, each preferably representing one side molding element. But it can also be preferred that the lateral mold frame is separated into more than two parts, e.g. 3, 4, 5, 6, 7, 8, 9, 10, 12, 15, 20, 30, 50 or 100 parts, each representing a side molding element. It can be very practical to divide the lateral mold frame into at least two side molding elements, for example to facilitate closing and opening the cavity, demolding etc. Each side molding element preferably comprises a first opposing part of a clamping element as described previously. Preferably, also the second opposing part is comprised in each side molding element. Like this, the foil can be fixated in each side molding element very efficiently. It is preferred, that for the foil-covering, a separate foil is inserted in each side molding element. When the side molding elements are brought together to form the cavity, the foils are preferably brought into overlap at their lateral edges. During heating, for example due to the natural heat produced from the melted injection molding material or for activating the foil, the overlapping foils are preferably weld together at their overlapping parts, therefore, at least one continuous stretch of foil-covered lateral surface of the molded object can be produced from several foils fixated against the cavity walls of several side molding elements.

In a further preferred embodiment of the invention, the side molding elements and the collar are configured for relative movement, thereby forming a closed and an open position, wherein in the closed position the lower region of the foil can be held at least partially between the side molding element and the collar, preferably between the side molding element and the exterior surface of the collar. In this embodiment, the side molding elements and the collar with its contained base plate can preferably be moved with respect to one another in order to form the cavity. In the closed position, all side molding elements are brought together flush and the lower regions of the elements closed flush around the exterior surface of the collar. In this closed position, the side molding elements preferably together form the lateral mold frame. Just as before, when the foil was held partially between the lower region of the lateral mold frame and the collar, the foil or foils now can preferably be held between a lower region of the side molding elements and the exterior surface of the collar.

This embodiment is surprisingly well suited for guiding the foil around the collar when closing the cavity into the closed position and clamping the foil between collar and side molding elements. Due to the division of the lateral mold frame into several side molding elements, the opening and closing process of the cavity can be achieved by lateral, translational movements of the side molding elements with respect to the collar. Like this, collar and side molding elements approach laterally, which supports the guiding process of the foil by the exterior surface of the collar hanging below the cavity walls. Any pushing force on the foil can essentially be prevented due to this lateral movement, thus very efficiently preventing any wrinkling or other unwanted deformation of the foil.

In a further preferred embodiment of the invention, the first opposing part of a clamping element and the second opposing part of a clamping element are configured for a relative movement between a first position and a second position, wherein in the first position a foil can be inserted between the first opposing part and the second opposing part, and wherein in the second position the upper region of the foil is held at least partially between the first opposing part and the second opposing part. In this embodiment, the clamping element, which preferably comprises two opposing parts, is configured for a relative movement between these two opposing parts. Preferably, the movement can be initiated automatically for an essentially automated production process. Therefore, it is particularly desirable that the second opposing element is not detached from the first opposing element, for example as in the preferred embodiment of the clamping element represented by the hinge. This facilitates the relative movement of both parts, furthermore, no extra elements are needed to attach and detach the second opposing element to realize first and second position.

It can also be preferred that the second opposing element is controlled by some external element, like a mechanical arm connected to the second opposing element and configured to move it between first and second position.

The process of foil insertion and clamping preferably is automated: at first, the foil is mechanically inserted between the two opposing parts in the second position. Second, both opposing parts are moved relatively to each other to close the clamping element and fix the foil. One embodiment of this movement could be that the second opposing part is moved while the first opposing part remains in a fixed position, preferably also with respect to the lateral mold frame where it is situated. It could also be preferred to implement a more complex movement, where different relative movements of the whole system are combined. For example, the closing process of the cavity with the relative movement e.g. between side molding elements and collar could be combined with the foil insertion process and the closing process of the clamping element involving the relative movement of the two opposing parts from first to second position. Like this, a very efficient, energy- and time-saving movement could be realized, thus enhancing the efficiency of the mass production process.

When a hinge is used as clamping element, the first position describes the hinge in an open position. With the hinge in an open position, the two opposing parts are separated and a foil can be inserted between them. The second position preferably comprises a rotational movement of the hinge by means of knuckle and pin into a closed position, where the foil can be clamped by the two opposing parts brought in contact via the clamped foil.

It is generally preferred that the whole process comprising all movements is preferably conducted essentially automatically, comprising a suitable electronic control system, motor- and/or hydraulic driven movements. A person skilled in the art, for example an engineer, knows how to implement machines for such a process.

In a further preferred embodiment of the invention, the lateral mold frame comprises a sprue for injecting injection molding material into the cavity, which can preferably be brought into superposition with the opening for a sprue of the collar. Like this, the injection molding process can be implemented very efficiently.

In a further preferred embodiment of the invention, the injection molding form system further comprises a device for thermally activating the foil, preferably a heater and/or a lamp. Like this, the foil can preferably made soft, flexible and thus easier to handle. In addition, different sheets of foil, for example inserted in different side molding elements, can preferably be welded together at their overlapping edges.

### Embodiments relating to the foil:

In one embodiment, the foil comprises or consists of a synthetic material and/or polymer. Polyurethane (PU), in particular thermoplastic polyurethane (TPU) is preferred. The use of the TPU-foil facilitates the easy design of the appearance of the object by printing different patterns on the foil prior to or after manufacture. In some embodiments, the foil comprises or consists of a thermoplastic material, said thermoplastic material comprising or consisting of preferably at least one of the following materials: thermoplastic polyurethane TPU, polyamide PA, polyethylene terephthalate PET, or polybutylene terephthalate PBT. In some embodiments, the thermoplastic material is selected from the group consisting of expanded TPU, polyester-based TPU, and polyether-based TPU.

In one embodiment, the foil has a thickness of 10 micrometer (µm) to 1 millimeter (mm), preferably 50 µm to 1000 µm, more preferably 100 µm to 500 µm.

It can be preferred to use several layers of foil at once to create a more robust and/or a structured foil. The device, preferably the heater and/or the lamp, can be situated at or near the lateral mold frame in order to activate the foil once it has been inserted and clamped and is hanging down the cavity wall. The heater and/or lamp can for example be placed in the middle of the side molding elements when the form is in an open position. The lamp is preferably a heat lamp radiating infrared radiation which transports heat, which can be absorbed by the foil in order to activate it. The device, in particular the heater and/or lamp preferably are placed in a position close enough to the foil to be activated. Like this, an activated foil can be used, making the handling of the foil easier and reducing the risk of breaking and/or wrinkling the foil.

The device for the thermal activation of the foil can preferably also be used in order to activate the outer shoe sole, in particular to make it more flexible and thus easier to handle.

In a further preferred embodiment of the invention, the injection molding form system further comprises at least one roll-off device configured for holding a roll of foil and a blade, wherein the roll-off device and the blade are configured to automatically unroll the roll of foil at least partially, to automatically cut the foil and insert the foil in the lateral mold in the open position. It is preferred that the basic scheme of this combination of a holder for a roll of foil and a blade is schematically similar to the scheme known from a tape dispenser. The similarity preferably lies in the roll of the blade which can be used as an edge to set the foil under tension when pulled but also serves as a blade for cutting the foil when the tension and/or pulling force exceeds a certain threshold and/or when the foil is positioned in a certain angle with respect to the blade. One preferred method to be realized with this embodiment comprises the steps of pulling the foil, inserting the foil, clamping the foil and the blading the foil. The involved movement can preferably be implemented such that all involved movements regarding the foil, the clamping element and the opening and closing process of the form (and the cavity) are combined in order to create an efficient movement scheme of the whole system for an automated production process of injected molding products. Preferably, the same sheet lengths of foils for insertion can be reproduced at every production cycle. As a blade, it is preferred that a tin or metal sheet and/or lip is used. This sheet or lip can be used to blade the foil and preferably also as an insulator protecting the roll of foil from the heat applied to the part of the foil inserted into the cavity in order to activate the foil. To achieve these insulating capacities, it can also comprise other suited materials, such as a polymer and/or a ceramic. The complete roll-off device can preferably be similar to a roll-off device for household foil.

In a further preferred embodiment of the invention, the injection molding form system further comprises a printing device, preferably automatic, for printing upon the foil, preferably by laser printing, non-impact-printing and/or tampography. Like this, the esthetic design of the foil can be facilitated.

It is one advantage of the foil that the injection molded products, in particular the injection molded shoe soles which are foil-covered at least laterally, can be designed in a much simpler way than the cured molding material itself could be designed, due e.g. to the suboptimal bonding between a varnish and the molding material. In addition, the material is often porous and/or heavily stressed. Using esthetic effects like luster cannot be achieved by varnishing the material directly. Using differently colored injection molding materials is very complicated as well and also yields suboptimal results and limited design possibilities. Therefore, using a foil can increase the design possibilities of the product and also the robustness of the design. Individualized design, e.g. of a shoe, is easily implementable. Printing the foil is a particularly efficient process. The printing of the foil is preferably accomplished prior to inserting the foil. This facilitates the printing process and an optimal setting for printing can be chosen.

In a further preferred embodiment of the invention, the injection molding form system is configured for the manufacture of a shoe sole and/or a shoe. It is particularly preferred that the base plate and/or the collar, especially the hollow space of the collar, are in the form of a shoe and/or a shoe sole. The system of this embodiment is particularly well suited for the production of a shoe sole of a shoe, which is preferably foil-covered laterally to protect the possibly porous midsole against climatic conditions and/or increased wear and additionally to increase the design possibilities.

### Embodiments related to the production method:

A further preferred embodiment of the invention, a method for manufacturing a molded element, preferably a shoe sole, comprises the following steps:
- providing an injection molding form system comprising a lateral mold frame and a base plate, preferably according to the previous description;
- preferably inserting an outer shoe sole on the base plate in the first position with a distance between the rim of the collar and the base plate being maximal;
- inserting at least one foil in the lateral mold frame when in an open position, preferably automatically, thereby positioning a foil against a first opposing part of a clamping element and inside the lateral mold frame against the cavity wall;
- closing the clamping element into a closed position and preferably temporarily clamping the foil in an upper region of the foil;
- thermally activating the foil as well as preferably the inserted outsole, in particular if the outsole is made from TPU or Rubber;
- lowering the upper closing element, e.g. a last with a shoe upper, then closing the side molding elements to form a closed cavity holding the lower region of the foil at least partially between the lateral mold frame and the base plate and/or the collar, preferably material-tight with respect to injection molding material; and holding the upper region of the foil clamped between the upper closing element, e.g. a last with a shoe upper, and the lateral mold frame preferably material-tight with respect to injection molding material, e.g. using an upper edge of the lateral mold frame, in particular the bite line,;
- preferably injecting injection molding material into the cavity;
- preferably moving the base plate in the second position with a distance between the rim of the collar and the base plate being minimal, wherein the rim and the base plate are preferably flush.

A further preferred embodiment of the invention, a method for manufacturing a molded element, preferably a shoe sole, comprises the following steps:
- providing an injection molding form system comprising a lateral mold frame and a base plate, preferably according to the previous description;
- preferably inserting an outer shoe sole on the base plate in the first position with a distance between the rim of the collar and the base plate being maximal;
- inserting at least one foil in the lateral mold frame when in an open position, preferably automatically, thereby positioning a foil against a first opposing part of a clamping element and inside the lateral mold frame against the cavity wall;
- closing the clamping element into a closed position and preferably temporarily clamping the foil in an upper region of the foil;
- thermally activating the foil as well as preferably the inserted outsole, in particular if the outsole is made from TPU or Rubber;
- closing the cavity into a closed position and holding the lower region of the foil at least partially between the lateral mold frame and the base plate and/or the collar, preferably material-tight with respect to injection molding material; and
- preferably injecting injection molding material into the cavity;
- preferably moving the base plate in the second position with a distance between the rim of the collar and the base plate being minimal, wherein the rim and the base plate are preferably flush.

The average skilled person recognizes that technical features, definitions and advantages of preferred embodiments of the collar and the molding form system also apply for the inventive method.

In a preferred embodiment of the invention, the injection molding form system further comprises additionally an upper closing element of the cavity, said upper closing element comprising a closing element or a last comprising a shoe upper; and the method further comprises the following steps:
- closing the cavity with the upper closing element of the cavity;
- preferably thermally fusing of at least two ends of the foil before injecting the injection molding material, wherein the injection molding material preferably is shoe sole material;
- preferably curing the injection molding material;
- preferably demolding.

The upper closing element preferably is a closing element closing the cavity from above, e.g. a dummy. It can be also preferred that the upper closing element is a last comprising a shoe upper. Like this, the complete shoe can be produced in a single process and/or system. The shoe upper preferably closes the cavity material tight from above. In addition, the upper preferably contacts the foil such that the foil is clamped between upper and lateral mold frame and such that a material tight contact surface between upper and foil can be created. In this case, the clamping element of the lateral mold frame is primarily used for a pre-clamping and fixing of the foil before the cavity is closed from above with the upper closing element. In this case it can also be preferred that no clamping element at all is used, only the foil is inserted along the cavity walls by some mechanism, clamped below by collar and/or base plate and lateral mold frame and held under tension from above by the roll-off device and/or the blade. Once the upper closing element, e.g a last with a shoe upper, and/or the lateral mold frame close the cavity and clamp the foil, e.g. along the bite line, the foil is preferably automatically cut or bladed. The foil can then be preferably thermally fused while already being positioned outlining the upper. The thermal energy for the fusing can be provided e.g. by heat contained in the mold form from previous production cycles or by an explicit heat source, for example within the lateral mold frame and/or generated by any exothermic reaction taking place inside the closed cavity, preferably the reaction of polyurethane and isocyanate.

The step of curing the injection molding material preferably can involve a heating process in order to evaporate liquid components of the material and/or waiting a certain time until the curing has taken place.

Demolding preferably comprises opening the cavity. It can be preferred that a removal of overlapping parts of the foil is implemented manually and/or automatically.

In a further preferred embodiment of the invention, the method comprises additionally the step of varnishing the foil by spraying varnish into the lateral mold frame and/or printing the foil prior to inserting the foil. Spraying varnish into the lateral mold frame not too long before the foil is inserted in the lateral mold frame is a very efficient way to design the foil.

A further preferred embodiment of the invention relates to a shoe with a foil covering one or more lateral parts of a shoe, at least partially, preferably manufactured by a method and or a device according to the preceding description. Such a shoe can be very robust, sophisticated in design and long-lasting.

### DETAILED DESCRIPTION OF THE INVENTION AND EXAMPLES

It should be understood that various alternatives to the embodiments of the invention described herein may be employed in practicing the invention. It is intended that the claims of the invention define the scope of the invention and that the method and apparatus within the scope of these claims and their equivalents be covered thereby. All embodiments relating to the collar, Injection molding form system or methods employing such components are intended to be disclosed in the context of each other, such that features of the collar or system may be considered as embodiments of the method, and vice versa.

Without intending to be limiting, the invention will be explained in more detail with reference to exemplary embodiments and the following figure:

### Brief description of the figures:

**Figure 1****:** Schematic illustration of the interaction of the collar, the base plate and one side molding element of the lateral mold frame for the injection molding and foil-covering of a shoe sole.
**Figures 2 - 9****:** Schematic illustration of the different steps of the production method.

### Detailed description of the figures:

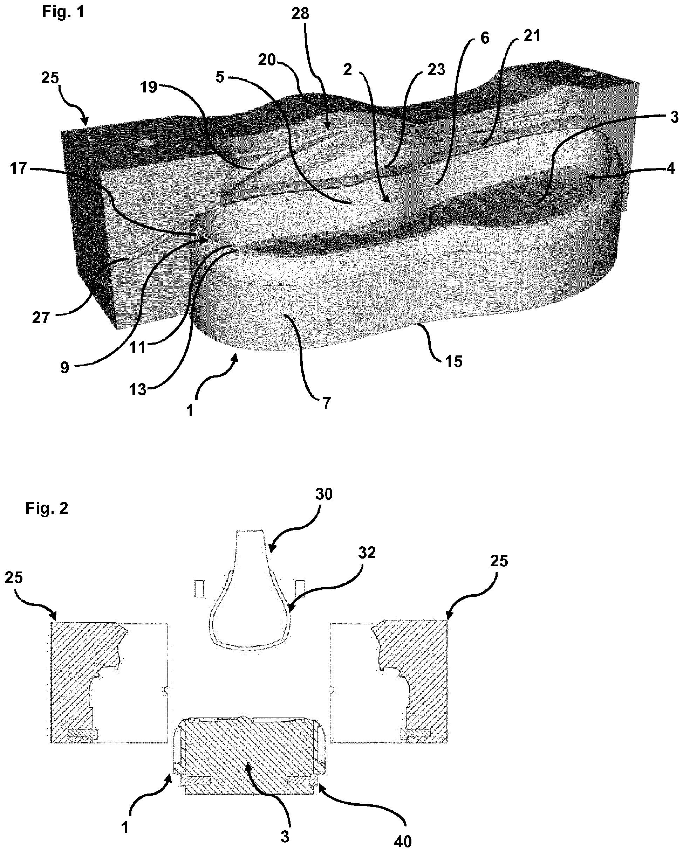

**Figure 1** illustrates the interaction of the collar **1,** the base plate **3** and one side molding element **25** of the lateral mold frame schematically. A premanufactured outer shoe sole can be inserted by putting it on the base plate **3,** which is positioned in the first position **4** with a maximum distance of the base plate **3** to the (upper) rim **9** of the collar **1.** The collar **1** is positioned flush around the base plate **3** with its evenly vertical interior surface **5** surrounding the hollow space **2** with a vertical height **6** and featuring an outline corresponding to the outline of the base plate **3.** This hollow space is configured for the movement of the base plate **3** between first **4** and second position, while the collar **1** is positioned flush (and material tight) around the base plate **3.**

The side molding element **25,** which together with a second side molding element (not shown) forms the lateral mold frame, provides a recess for the collar **21,** such that the interior surface **5** of the collar **1** can be positioned flush with the cavity wall **19** of the side molding element and the exterior surface **7** flush with a lower part of the side molding element **25.** Like this, a cavity can be formed by the lateral mold frame positioned around the collar **1,** the collar **1** and the base plate **3** thereby forming the base of the cavity and the lateral mold frame forming the cavity walls **19.** The side molding element **25** comprises a sprue **27** for injection of the injection molding material **38,** more specifically the midsole material. This sprue **27** can be brought into superposition with the opening for a sprue **17** of the collar **1.** When the shoe sole material **38** is injected, the base plate **3** is in the first position. It is only later that the base plate **3** is preferably brought into the second position, flush with the rim **9** of the collar **1.** During this step, the shoe sole material **38** can be preferably further compressed and is brought into its actual form of a shoe sole, which is given preferably by the base plate **3** (and the outer shoe sole being laid out on it) and the cavity walls **19** of the lateral mold frame. An upper closing element **30** (not shown) closes the cavity from above during this process, thus contributing to the contouring of the produced shoe sole.

One goal of the collar 1 within this combination is to allow a material tight movement of the base plate **3,** while at the same time being an interchangeable element of the injection molding form. This can become necessary because of the enhanced stress of this component due to the repetitive movement of the base plate **3** within the collar **1.** However, the main advantage of the collar **1** is the simple and efficient foil-covering of the produced component, here a shoe sole. The lateral foil-covering of a shoe sole can be achieved by positioning a foil **34** inside the lateral mold frame against the cavity wall **19.** The foil **34** can be positioned and held in an upper region by a clamping element **36** (not shown), e.g. a hinge, which is situated in the upper region of the lateral mold frame **20.** Before closing both side molding elements **25** around the collar, the foil **34** will thus just hang down loosely from the upper region of the lateral mold frame **20** along the cavity wall **19.** When the side molding elements **25** and the collar **1** are brought into the closed position, the foil **34** will be dragged along by the exterior surface **7** of the collar, preferably by frictional forces, until it is clamped material tight between the even surface **11** of the collar and the second even surface **23** of the lateral mold frame as well as the exterior surface **7** of the collar **1** and the recess for the collar **21** of the lateral mold frame. For the purpose of guiding the foil **34** and dragging along the foil **34,** the exterior surface **7** of the collar **1** preferably has an externally curved surface from the rim to the edge of the collar **15** on the collar's **1** bottom. In order to not accidentally cut the foil **34** during this process by sharp edges, a rounded transition **13** is supplied at the rim **9** of the collar between its even surface **11** and the exterior surface **7.**

Thus, in the closed position, the foil **34** is positioned tight along the cavity walls **19** in order to foil the lateral part of the produced (inner) shoe sole. If there is still space between the foil **34** and the cavity wall **19,** this space preferably is removed when injecting the material **38** in the cavity by the pressure exerted by the expanding material. After demolding, overhanging parts of the foil **34** can preferably be removed, e.g. manually.

**Figure 2** schematically shows the injection molding form system in an open position, comprising a lower closing element containing a base plate **3** within a collar **1,** an upper closing element comprising a last **30** with a shoe upper **32** positioned onto it and a lateral mold frame comprising two side molding elements **25.** The open position in this example is realized by the side molding elements **25** being positioned in a lateral distance to each other, whereas the last **30** is (already) in a lowered position. The lower closing element is in a lowered position, wherein collar **1** and base plate **3** are in a second position, with a distance between the rim **9** of the collar and the base plate **3** being minimal. An outer shoe sole can preferably be positioned on the base plate **3.**

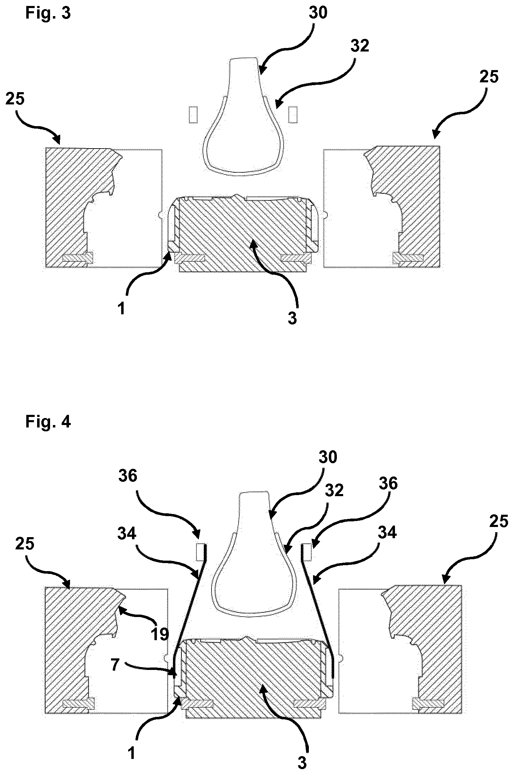

**Figure 3** shows the lower closing element in a raised position, wherein collar **1** and base plate **3** are still in a second position. The collar **1** can preferably be raised in this position by raising the base plate **3** while resting the collar **1** on the supporting elements of the base plate **40.** The injection molding form system is still in an open position due to the side molding elements **25** still being spaced apart.

In **Figure 4** it is shown that the foil **34** is positioned in the lateral mold frame by the clamping elements **36** above the lateral mold frame. The foil **34** in this production step is hanging down loosely, preferably in some proximity to the lateral mold frame wall **19,** in particular parallel to it. The lower part of the foil is guided around the lower closing element by the exterior surface **7** of the collar **1.** While not shown explicitly, the foil can preferably consist of two lateral foil elements, which are overlapping at a front side and a back side of the shoe sole to be produced.

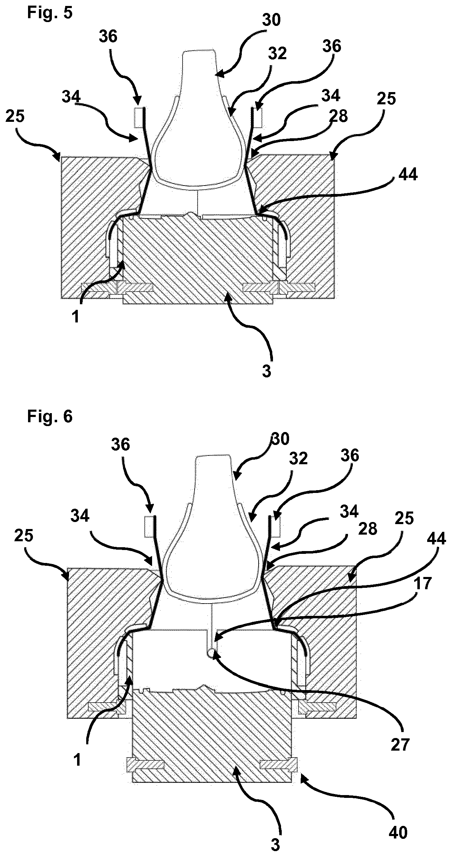

**Figure 5** shows the injection molding form system in a closed position, wherein the side molding elements are positioned flush around the last **30** and the lower closing element. Like this, a cavity is formed, wherein the foil **34** is clamped between an upper edge **28** of the lateral mold frame, preferably a bite line, and the last **30** and also between a lower edge **44** of the lateral mold frame and the lower closing element. While it is shown that the clamping elements **36** still hold the foil **34,** they are not essential anymore to position the foil **34** in the lateral mold frame, since the upper part of the foil **34** is clamped between the last **30** and the side molding elements **25.**

In **Figure 6****,** it is shown that base plate **3** is lowered, and collar **1** and base plate **3** are in a first position, for injection of injection molding material **38** through the sprue **27** and/or the opening of a sprue **17** in the collar **1.** The collar **1** is positioned in an upper position, even with the base plate being lowered, by the supporting elements of the lateral mold frame **42.** Like this, clamping of the foil **34** between collar and lower edge **44** of the lateral mold frame is preferably enhanced.

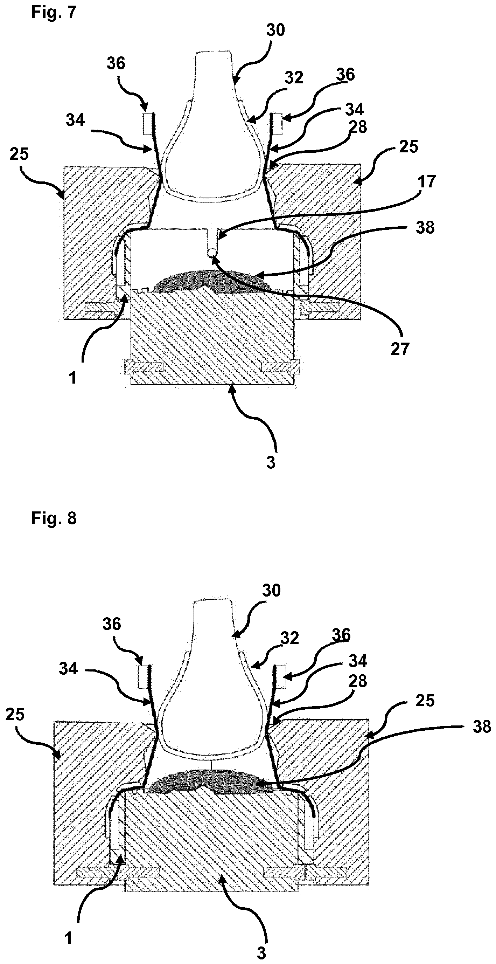

**Figure 7** shows the injection of injection molding material **28** through the sprue **27** and/or the opening of a sprue **17** into the cavity.

**Figure 8** shows a raised base plate **3,** with base plate **3** and collar **1** being in a second position. Like this, the sprue **27** and/or the opening for a sprue **17** are closed and the injection process of the injection molding material **28** is terminated.

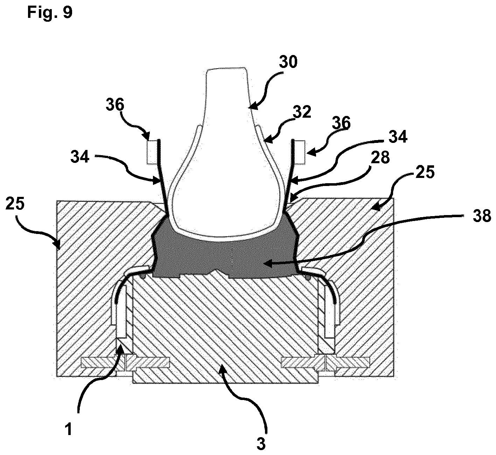

**Figure 9** shows the injection molding material fully expanded, thus filling up the whole cavity which exhibits the shape of the (mid-) sole. The material **38** preferably bonds with the foil **34** and the shoe upper **32,** thus essentially forming the complete shoe. The foil **34** can preferably be fused at least partially on the front and/or the back side by the heat released from the material **38.** The foil **34** covers the sole laterally, enhancing its robustness, esthetics and the scope for designing the shoe. Once the injection molding material **38** is cured, the shoe can preferably be demolded by opening the injection molding form system.

### LIST OF REFERENCE SIGNS

- 1: Collar
- 2: Hollow space
- 3: Base plate
- 4: First position
- 5: Interior surface
- 6: Vertical height
- 7: Exterior surface
- 9: Rim
- 11: Even surface
- 13: Rounded transition
- 15: Edge of the collar
- 17: Opening for a sprue
- 19: Lateral mold frame wall
- 20: Upper region of the lateral mold frame
- 21: Recess for the collar
- 23: Second even surface
- 25: Side molding element
- 27: Sprue
- 28: Upper edge / Bite Line
- 30: Upper closing element / last
- 32: Shoe upper
- 34: Foil
- 36: Clamping element
- 38: Injection molding material
- 40: Supporting element of the base plate
- 42: Supporting element of the lateral mold frame
- 44: Lower edge

## Claims

1. A method for manufacturing a shoe sole or part thereof, with a foil (34) applied to the lateral surface of the sole, the method comprising:
providing an injection molding form system, said system comprising a lateral mold frame, an upper closing element (30) and a lower closing element,
positioning a foil (34) in the lateral mold frame, by clamping the foil (34) between an upper edge (28) of the lateral mold frame and the upper closing element (30), and a lower edge (44) of the lateral mold frame and the lower closing element, thereby forming a cavity in the form of a shoe sole or part thereof, in which the foil (34) inside the cavity is held against or in proximity to the inside of the lateral mold frame, and
injecting molding material (38) into the cavity.

2. Method according to the preceding claim, wherein the upper closing (30) element comprises or consists of a dummy or a shoe last and the lower closing element comprises or consists of a base plate (3).

3. Method according to any one of the preceding claims, wherein the foil (34) is positioned in the lateral mold frame when the injection molding form system is in an open position, and closing the injection molding form system into a closed position by closing the lateral mold frame, lowering the upper closing element (30) and/or raising the lower closing element, thereby forming an essentially material tight cavity in the form of a shoe sole or part thereof.

4. Method according to any one of the preceding claims, wherein the upper closing element (30) comprises or consists of a shoe last and the lower closing element comprises or consists of a base plate (3), the method comprising:
- positioning an outer shoe sole on the base plate (3);
- positioning a shoe upper (32) onto the last (30);
- positioning the foil (34) in the lateral mold frame when the injection molding form system is in an open position;
- closing the injection molding form system into a closed position, thereby forming an essentially material tight cavity in the form of a shoe sole or part thereof, by lowering the last (30) and/or by raising the base plate (3) and then closing the lateral mold frame, ;
- injecting injection molding material (38) into the cavity;
- curing of the injection molding material (38); and
- demolding the shoe sole or part thereof by opening the injection molding form system into the open position by opening the lateral mold frame, raising the last (30) and/or lowering the base plate (3).

5. Method according to any one of the preceding claims, wherein the injection molding form system comprises additionally means for positioning the foil (34), preferably a clamping element (36), outside the lateral mold frame, thereby positioning the foil (34) inside the cavity against or in proximity to a lateral mold frame wall (19).

6. Method according to any one of the preceding claims, wherein the injection molding form system additionally comprises a collar (1),
wherein the collar (1) is positioned or configured for positioning flush around the base plate (3), such that the collar (1) and the base plate (3) form the lower closing element, and wherein a lower region of the foil (34) is held between the lateral mold frame and the collar (1) when closed to form the cavity.

7. Method according to any one of the preceding claims, wherein
after closing the injection molding form system, the base plate (3) is brought into a first, lower position allowing injection of the injection molding material (38), wherein the base plate (3) is positioned below a sprue (27) in the lateral mold frame and/or an opening for a sprue (17) in the collar (1), and
wherein the base plate (3) is subsequently brought into a second, upper position above the sprue (27) and/or the opening for a sprue (17), for reducing the volume of the cavity to a final shape of the shoe sole or part thereof and stopping the injection of the injection molding material (38) by closing the sprue (27) and/or the opening for a sprue (17).

8. Method according to any one of the preceding claims, wherein:
a. the foil (34) is thermally activated prior to closing the cavity,
b. at least two ends of the foil (34) are thermally fused before and/or during injecting the injection molding material (38),
c. the method comprises additionally the step of varnishing or coating the foil (34) by spraying varnish or a coating into the lateral mold frame and/or printing the foil (34) prior to inserting the foil (34), and/or
d. the method comprises additionally the step of finishing the foil (34) and/or the shoe sole or the part thereof.

9. Shoe, comprising a shoe sole or part thereof, said shoe sole comprising a foil (34) at least partially covering one or more lateral parts of the shoe sole or part thereof, manufactured by a method according to any one of claims 1 to 8, wherein the upper edge of the lateral mold frame comprises an edge which is particularly shaped to close the mold material tight around the shoe upper and/or for clamping the foil material tight between the shoe upper and the lateral mold frame, thereby forming a bite line, along which the foil is thermally fused to the shoe upper and the foil is cut or bladed.

10. Injection molding form system configured for manufacturing a shoe sole or part thereof according to the method of any one of the preceding claims, comprising a lateral mold frame, an upper closing element (30), a lower closing element, and a foil (34) and/or means for positioning a foil for covering a lateral surface of a shoe sole or part thereof.

11. Injection molding form system according to the preceding claim, wherein the lateral mold frame comprises a sprue (27) for injecting injection molding material (38) into a cavity to be formed in the injection molding form system.

12. Injection molding form system according to the preceding claim, comprising additionally a collar (1), preferably according to claim 6,
wherein the collar (1) is positioned or configured for positioning flush around the base plate (3), such that the collar (1) and the base plate (3) form the lower closing element, and wherein a lower region of the foil (34) can be held between the lateral mold frame and the collar (1) when closed to form the cavity, and wherein the lateral mold frame is configured for positioning flush around the collar (1) upon closing the lateral mold frame.

13. Injection molding form system according to the preceding claim, wherein the lateral mold frame comprises a recess (21) for the collar (1), such that the lower region of the lateral mold frame can be positioned flush around the collar (1) and the interior surface of the collar (1) can be positioned flush with the lateral mold frame wall (19) and is essentially material-tight with respect to the injection molding material (38).

14. Injection molding form system according to any one of claims 12 or 13, wherein the collar (1) comprises
- a smooth and vertical interior surface (5) directly surrounding an open hollow space (2), wherein the hollow space (2) comprises a vertical height (6) and an outline in the form of an outline of the base plate (3); wherein the base plate (3) and the collar (1), especially the hollow space (2) of the collar (1), are in the form of a shoe and/or a shoe sole,
- an exterior surface (7), wherein the exterior surface (7) preferably is smoothly curved externally from the rim (9) of the collar (1) to an edge (15) of the collar (1) at the lower transition of the exterior surface (7) to the interior surface (5) and
- a rim (9) at the upper transition of the interior surface (5) to the exterior surface (7), wherein the rim (9) preferably comprises an even surface (11), which is preferably horizontal, and a rounded transition (13) between the even surface (11) and the exterior surface (7).

15. Injection molding form system, according to any one of claims 12 to 14,
wherein the collar (1) and the base plate (3) are mounted or configured for mounting to move with respect to each other and are configured for a vertical movement between a first (4) and a second position,
wherein in the first position (4), a distance between the rim (9) of the collar (1) and the base plate (3) is maximal, preferably for injection of an injection molding material (38), and
wherein in the second position the distance between the rim (9) of the collar (1) and the base plate (3) is minimal, wherein the rim (9) and the base plate (9) are preferably flush.

16. Injection molding form system according to the preceding claim, wherein the collar (1) comprises an opening for a sprue (17), preferably at the rim (9) of the collar (1), and wherein the opening for a sprue (17) is situated between the rim (9) of the collar (1) and the base plate (3), when the collar (1) and the base plate (3) are in the first position (4).

17. Injection molding form system according to any one of claims 10 to 16, comprising additionally:
a. a device for thermally activating the foil (34) and/or an inserted element placed inside the form system, preferably a heater and/or a lamp,
b. means for positioning the foil (34), preferably a clamping element (36), outside the lateral mold frame, thereby positioning the foil (34) inside the cavity against or in proximity to the lateral mold frame wall (19),
c. at least one roll-off device configured for holding a roll of foil (34) and a blade, wherein the roll-off device and the blade are configured to automatically unroll a roll of foil (34) at least partially, to automatically cut the foil (34) and position the foil (34) in the lateral mold in the open position, and/or
d. a printing device for printing upon the foil (34), preferably by laser printing, non-impact-printing and/or tampography.

## Patentansprüche

1. Verfahren zur Herstellung einer Schuhsole oder eines Teils davon mit einer Folie (34), die auf der seitlichen Oberfläche der Sohle aufgebracht ist, wobei das Verfahren Folgendes umfasst:
Bereitstellen eines Spritzgießformsystems, wobei das System einen seitlichen Formrahmen, ein oberes Verschlusselement (30) und ein unteres Verschlusselement umfasst,
Positionieren einer Folie (34) in dem seitlichen Formrahmen, indem die Folie (34) zwischen einer oberen Kante (28) des seitlichen Formrahmens und dem oberen Verschlusselement (30) sowie einer unteren Kante (44) des seitlichen Formrahmens und dem unteren Verschlusselement eingeklemmt wird, wodurch ein Hohlraum in Form einer Schuhsohle oder eines Teils davon gebildet wird, in dem die Folie (34) innerhalb des Hohlraums gegen oder nahe der Innenseite des seitlichen Formrahmens gehalten wird, und
Einspritzen von Gießmaterial (38) in den Hohlraum.

2. Verfahren nach dem vorhergehenden Anspruch, wobei das obere Verschlusselement (30) eine Attrappe oder einen Schuhleisten umfasst oder daraus besteht und das untere Verschlusselement eine Basisplatte (3) umfasst oder daraus besteht.

3. Verfahren nach einem der vorhergehenden Ansprüche, wobei die Folie (34) in den seitlichen Formrahmen positioniert wird, wenn sich das Spritzgießformsystem in einer offenen Position befindet, und das Spritzgießformsystem in eine geschlossene Position geschlossen wird, indem der seitliche Formrahmen geschlossen wird, wobei das obere Verschlusselement (30) abgesenkt und/oder das untere Verschlusselement angehoben wird, wodurch ein im Wesentlichen materialdichter Hohlraum in Form einer Schuhsohle oder eines Teils davon gebildet wird.

4. Verfahren nach einem der vorhergehenden Ansprüche, wobei das obere Verschlusselement (30) einen Schuhleisten umfasst oder daraus besteht und das untere Verschlusselement eine Basisplatte (3) umfasst oder daraus besteht, wobei das Verfahren Folgendes umfasst:
- Positionieren einer äußeren Schuhsohle auf der Basisplatte (3);
- Positionieren eines Schuhschafts (32) auf den Leisten (30);
- Positionieren der Folie (34) in den seitlichen Formrahmen, wenn sich das Spritzgießformsystem in einer offenen Position befindet;
- Schließen des Spritzgießformsystems in eine geschlossene Position, wodurch ein im Wesentlichen materialdichter Hohlraum in Form einer Schuhsohle oder eines Teils davon gebildet wird, indem der Leisten (30) abgesenkt und/oder die Basisplatte (3) angehoben und dann der seitliche Formrahmen geschlossen wird;
- Einspritzen von Spritzgießmaterial (38) in den Hohlraum;
- Aushärten des Spritzgießmaterials (38); und
- Entnehmen der Schuhsohle oder des Teils davon durch Öffnen des Spritzgießformsystems in die offene Position, indem der seitliche Formrahmen geöffnet, der Leisten (30) angehoben und/oder die Basisplatte (3) abgesenkt wird.

5. Verfahren nach einem der vorhergehenden Ansprüche, wobei das Spritzgießformsystem zusätzlich Mittel zum Positionieren der Folie (34), vorzugsweise ein Klemmelement (36), außerhalb des seitlichen Formrahmens umfasst, wodurch die Folie (34) innerhalb des Hohlraums gegen oder nahe einer Wand (19) des seitlichen Formrahmens positioniert wird.

6. Verfahren nach einem der vorhergehenden Ansprüche, wobei das Spritzgießformsystem zusätzlich eine Manschette (1) umfasst,
wobei die Manschette (1) bündig um die Basisplatte (3) positioniert oder zu einer derartigen Positionierung konfiguriert ist, sodass die Manschette (1) und die Basisplatte (3) das untere Verschlusselement bilden, und wobei ein unterer Bereich der Folie (34) zwischen dem seitlichen Formrahmen und der Manschette (1) im geschlossenen Zustand gehalten wird, um den Hohlraum zu bilden.

7. Verfahren nach einem der vorhergehenden Ansprüche, wobei nach dem Schließen des Spritzgießformsystems die Basisplatte (3) in eine erste, niedrigere Position gebracht wird, in der eine Einspritzung des Spritzgießmaterials (38) ermöglicht wird, wobei die Basisplatte (3) unter einem Anguss (27) in dem seitlichen Formrahmen und/oder einer Öffnung für einen Anguss (17) in der Manschette (1) positioniert ist, und
wobei die Basisplatte (3) anschließend in eine zweite, obere Position über dem Anguss (27) und/oder der Öffnung für einen Anguss (17) gebracht wird, um das Volumen des Hohlraums auf eine Endform der Schuhsohle oder des Teils davon zu reduzieren und die Einspritzung des Spritzgießmaterials (38) durch Schließen des Angusses (27) und/oder der Öffnung für einen Anguss (17) zu stoppen.

8. Verfahren nach einem der vorhergehenden Ansprüche, wobei:
a. die Folie (34) vor dem Schließen des Hohlraums thermisch aktiviert wird,
b. mindestens zwei Enden der Folie (34) vor oder während des Einspritzens des Spritzgießmaterials (38) thermisch verschmolzen werden,
c. das Verfahren zusätzlich den Schritt des Lackierens oder Beschichtens der Folie (34) durch Sprühen eines Lackes oder einer Beschichtung in den seitlichen Formrahmen und/oder Bedrucken der Folie (34) vor dem Einsetzen der Folie (34) umfasst, und/oder
d. das Verfahren zusätzlich den Schritt der Endbearbeitung der Folie (34) und/oder der Schuhsohle oder des Teils davon umfasst.

9. Schuh, umfassend eine Schuhsohle oder einen Teil davon, wobei die Schuhsohle eine Folie (34) umfasst, die mindestens teilweise einen oder mehrere seitliche Teile der Schuhsohle oder des Teils davon bedeckt, hergestellt durch ein Verfahren nach einem der Ansprüche 1 bis 8, wobei die obere Kante des seitlichen Formrahmens eine Kante umfasst, die speziell geformt ist, um das Gießmaterial eng um den Schuhschaft zu schließen und/oder das Folienmaterial fest zwischen dem Schuhschaft und dem seitlichen Formrahmen einzuklemmen, wodurch eine Eingriffslinie gebildet wird, entlang welcher die Folie thermisch mit dem Schuhschaft verschmolzen wird und die Folie abgeschnitten wird.

10. Spritzgießformsystem, das zur Herstellung einer Schuhsohle oder eines Teils davon gemäß dem Verfahren nach einem der vorhergehenden Ansprüche konfiguriert ist, umfassend einen seitlichen Formrahmen, ein oberes Verschlusselement (30), ein unteres Verschlusselement und eine Folie (34) und/oder Mittel zum Positionieren einer Folie zum Bedecken einer seitlichen Oberfläche einer Schuhsohle oder eines Teils davon.

11. Spritzgießformsystem nach dem vorhergehenden Anspruch, wobei der seitliche Formrahmen einen Anguss (27) zum Einspritzen von Spritzgießmaterial (38) in einen in dem Spritzgießformsystem zu bildenden Hohlraum umfasst.

12. Spritzgießformsystem nach dem vorhergehenden Anspruch, zusätzlich umfassend eine Manschette (1), vorzugsweise nach Anspruch 6,
wobei die Manschette (1) bündig um die Basisplatte (3) positioniert oder zu einer derartigen Positionierung konfiguriert ist, sodass die Manschette (1) und die Basisplatte (3) das untere Verschlusselement bilden, und wobei einer unterer Bereich der Folie (34) zwischen dem seitlichen Formrahmen und der Manschette (1) im geschlossenen Zustand gehalten werden kann, um den Hohlraum zu bilden, und wobei der seitliche Formrahmen dazu konfiguriert ist, beim Schließen des seitlichen Formrahmens bündig um die Manschette (1) positioniert zu werden.

13. Spritzgießformsystem nach dem vorhergehenden Anspruch, wobei der seitliche Formrahmen eine Aussparung (21) für die Manschette (1) umfasst, sodass der untere Bereich des seitlichen Formrahmens bündig um die Manschette (1) positioniert werden kann und die Innenfläche der Manschette (1) bündig mit der Wand (19) des seitlichen Formrahmens positioniert werden kann und im Wesentlichen materialdicht bezüglich des Spritzgießmaterials (38) ist.

14. Spritzgießformsystem nach einem der Ansprüche 12 oder 13, wobei die Manschette (1) Folgendes umfasst:
- eine glatte und vertikale Innenfläche (5), die einen offenen Hohlraum (2) direkt umgibt, wobei der Hohlraum (2) eine vertikale Höhe (6) und einen Umriss in Form eines Umrisses der Basisplatte (3) umfasst; wobei die Basisplatte (3) und die Manschette (1), insbesondere der Hohlraum (2) der Manschette (1), in Form eines Schuhs und/oder einer Schuhsohle vorliegen,
- eine Außenfläche (7), wobei die Außenfläche (7) vorzugsweise außen von dem Rand (9) der Manschette (1) zu einer Kante (15) der Manschette (1) an dem unteren Übergang der Außenfläche (7) zu der Innenfläche (5) gleichmäßig gekrümmt ist,
und
- einen Rand (9) an dem oberen Übergang der Innenfläche (5) zu der Außenfläche (7), wobei der Rand (9) vorzugsweise eine ebene Fläche (11), die vorzugsweise horizontal verläuft, und einen abgerundeten Übergang (13) zwischen der ebenen Fläche (11) und der Außenfläche (7) umfasst.

15. Spritzgießformsystem nach einem der Ansprüche 12 bis 14, wobei die Manschette (1) und die Basisplatte (3) derart montiert oder zu einer derartigen Montage konfiguriert sind, dass sie bezüglich zueinander bewegen, und für eine vertikale Bewegung zwischen einer ersten (4) und einer zweiten Position konfiguriert sind,
wobei in der ersten Position (4) ein Abstand zwischen dem Rand (9) der Manschette (1) und der Basisplatte (3) maximal ist, vorzugsweise zur Einspritzung eines Spritzgießmaterials (38), und
wobei in der zweiten Position der Abstand zwischen dem Rand (9) der Manschette (1) und der Basisplatte (3) minimal ist, wobei der Rand (9) und die Basisplatte (9) vorzugweise bündig sind.

16. Spritzgießformsystem nach dem vorhergehenden Anspruch, wobei die Manschette (1) eine Öffnung für einen Anguss (17) umfasst, vorzugsweise am Rand (9) der Manschette (1), und wobei sich die Öffnung für einen Anguss (17) zwischen dem Rand (9) der Manschette (1) und der Basisplatte (3) befindet, wenn sich die Manschette (1) und die Basisplatte (3) in der ersten Position (4) befinden.

17. Spritzgießformsystem nach einem der Ansprüche 10 bis 16, zusätzlich umfassend:
a. eine Vorrichtung zum thermischen Aktivieren der Folie (34) und/oder ein in dem Formsystem platziertes eingesetztes Element, vorzugsweise ein Heizelement und/oder eine Lampe,
b. Mittel zum Positionieren der Folie (34), vorzugweise ein Klemmelement (36), außerhalb des seitlichen Formrahmens, wodurch die Folie (34) innerhalb des Hohlraums gegen oder nahe der Wand (19) des seitlichen Formrahmens positioniert wird,
c. mindestens eine Abrollvorrichtung, die zum Halten einer Folienrolle (34) und einer Klinge konfiguriert ist, wobei die Abrollvorrichtung und die Klinge dazu konfiguriert sind, automatisch eine Folienrolle (34) mindestens teilweise abzurollen, um die Folie (34) automatisch abzuschneiden und die Folie (34) in die seitliche Form in der offenen Position zu positionieren, und/oder
d. eine Druckvorrichtung zum Bedrucken der Folie (34), vorzugsweise durch Laserdruck, anschlagfreien Druck und/oder Tampondruck.

## Revendications

1. Procédé de fabrication d'une semelle de chaussure ou d'une partie de celle-ci ayant une feuille (34) appliquée à la surface latérale de la semelle, le procédé comprenant :
la fourniture d'un système de forme de moulage par injection, ledit système comprenant un cadre de moule latéral, un élément de fermeture supérieur (30) et un élément de fermeture inférieur,
le positionnement d'une feuille (34) dans le cadre de moule latéral, en fixant la feuille (34) entre un bord supérieur (28) du cadre de moule latéral et l'élément de fermeture supérieur (30), et un bord inférieur (44) du cadre de moule latéral et l'élément de fermeture inférieur, formant ainsi une cavité sous la forme d'une semelle de chaussure ou d'une partie de celle-ci, dans lequel la feuille (34) à l'intérieur de la cavité est maintenue contre l'intérieur du cadre de moule latéral ou à proximité de celui-ci, et
l'injection de matière de moulage (38) dans la cavité.

2. Procédé selon la revendication précédente, dans lequel l'élément de fermeture supérieur (30) comprend une fausse forme ou une forme à chaussure ou se compose de celles-ci, et l'élément de fermeture inférieur comprend une embase (3) ou se compose de celle-ci.

3. Procédé selon l'une quelconque des revendications précédentes, dans lequel la feuille (34) est positionnée dans le cadre de moule latéral lorsque le système de forme de moulage par injection est dans une position ouverte, et la fermeture du système de forme de moulage par injection dans une position fermée en fermant le cadre de moule latéral, en abaissant l'élément de fermeture supérieur (30) et/ou en élevant l'élément de fermeture inférieur, formant ainsi une cavité essentiellement hermétique à la matière sous la forme d'une semelle de chaussure ou d'une partie de celle-ci.

4. Procédé selon l'une quelconque des revendications précédentes, dans lequel l'élément de fermeture supérieur (30) comprend une forme à chaussure ou se compose de celle-ci, et l'élément de fermeture inférieur comprend une embase (3) ou se compose de celle-ci, le procédé comprenant :
- le positionnement d'une semelle extérieure de chaussure sur l'embase (3) ;
- le positionnement d'une empeigne de chaussure (32) sur la forme (30) ;
- le positionnement de la feuille (34) dans le cadre de moule latéral lorsque le système de forme de moulage par injection est dans une position ouverte ;
- la fermeture du système de forme de moulage par injection dans une position fermée, formant ainsi une cavité essentiellement hermétique à la matière sous la forme d'une semelle de chaussure ou d'une partie de celle-ci, en abaissant la forme (30) et/ou en élevant l'embase (3) puis en fermant le cadre de moule latéral ;
- l'injection de matière de moulage par injection (38) dans la cavité ;
- le durcissement de la matière de moulage par injection (38) ; et
- le démoulage de la semelle de chaussure ou d'une partie de celle-ci en ouvrant le système de forme de moulage par injection dans la position ouverte en ouvrant le cadre de moule latéral, en élevant la forme (30) et/ou en abaissant l'embase (3).

5. Procédé selon l'une quelconque des revendications précédentes, dans lequel le système de forme de moulage par injection comprend également un moyen pour positionner la feuille (34), de préférence un élément de fixation (36), à l'extérieur du cadre de moule latéral, positionnant ainsi la feuille (34) à l'intérieur de la cavité contre une paroi de cadre de moule latéral (19) ou à proximité de celui-ci.

6. Procédé selon l'une quelconque des revendications précédentes, dans lequel le système de forme de moulage par injection comprend également un collier (1),
dans lequel le collier (1) est positionné ou conçu pour être positionné au même niveau autour de l'embase (3), de sorte que le collier (1) et l'embase (3) forment l'élément de fermeture inférieur, et dans lequel une région inférieure de la feuille (34) est maintenue entre le cadre de moule latéral et le collier (1) lorsqu'il est fermé pour former la cavité.

7. Procédé selon l'une quelconque des revendications précédentes, dans lequel
après la fermeture du système de forme de moulage par injection, l'embase (3) est amenée dans une première position inférieure permettant l'injection de la matière de moulage par injection (38), dans lequel l'embase (3) est positionnée sous une carotte (27) dans le cadre de moule latéral et/ou une ouverture pour une carotte (17) dans le collier (1), et
dans lequel l'embase (3) est ensuite amenée dans une seconde position supérieure au-dessus de la carotte (27) et/ou de l'ouverture pour une carotte (17), pour réduire le volume de la cavité à une forme finale de la semelle de chaussure ou d'une partie de celle-ci et arrêter l'injection de la matière de moulage par injection (38) en fermant la carotte (27) et/ou l'ouverture pour une carotte (17).

8. Procédé selon l'une quelconque des revendications précédentes, dans lequel :
a. la feuille (34) est activée thermiquement avant la fermeture de la cavité,
b. au moins deux extrémités de la feuille (34) sont fusionnées thermiquement avant et/ou pendant l'injection de la matière de moulage par injection (38),
c. le procédé comprend également l'étape de vernissage ou de revêtement de la feuille (34) par pulvérisation de vernis ou d'un revêtement dans le cadre de moule latéral et/ou impression de la feuille (34) avant insertion de la feuille (34), et/ou
d. le procédé comprend également l'étape de finition de la feuille (34) et/ou de la semelle de chaussure ou de la partie de celle-ci.

9. Chaussure, comprenant une semelle de chaussure ou une partie de celle-ci, ladite semelle de chaussure comprenant une feuille (34) recouvrant au moins partiellement une ou plusieurs parties latérales de la semelle de chaussure ou d'une partie de celle-ci, fabriquée par un procédé selon l'une quelconque des revendications 1 à 8, dans lequel le bord supérieur du cadre de moule latéral comprend un bord qui est particulièrement formé pour fermer la matière à mouler hermétiquement autour de l'empeigne de chaussure et/ou pour fixer la matière de feuille de manière hermétique entre l'empeigne de chaussure et le cadre de moule latéral, formant ainsi une ligne de jonction, le long de laquelle la feuille est thermiquement fusionnée à l'empeigne de chaussure et la feuille est coupée ou laminée.

10. Système de forme de moulage par injection conçu pour fabriquer une semelle de chaussure ou une partie de celle-ci selon le procédé selon l'une quelconque des revendications précédentes, comprenant un cadre de moule latéral, un élément de fermeture supérieur (30), un élément de fermeture inférieur et une feuille (34) et/ou un moyen pour positionner une feuille pour recouvrir une surface latérale d'une semelle de chaussure ou d'une partie de celle-ci.

11. Système de forme de moulage par injection selon la revendication précédente, dans lequel le cadre de moule latéral comprend une carotte (27) pour injecter une matière de moulage par injection (38) dans une cavité à former dans le système de forme de moulage par injection.

12. Système de forme de moulage par injection selon la revendication précédente, comprenant également un collier (1), de préférence selon la revendication 6,
dans lequel le collier (1) est positionné ou conçu pour être positionné au même niveau autour de l'embase (3), de sorte que le collier (1) et l'embase (3) forment l'élément de fermeture inférieur, et dans lequel une région inférieure de la feuille (34) peut être maintenue entre le cadre de moule latéral et le collier (1) lorsqu'il est fermé pour former la cavité, et dans lequel le cadre de moule latéral est conçu pour être positionné au même niveau autour du collier (1) lors de la fermeture du cadre de moule latéral.

13. Système de forme de moulage par injection selon la revendication précédente, dans lequel le cadre de moule latéral comprend un évidement (21) pour le collier (1), de sorte que la région inférieure du cadre de moule latéral peut être positionnée au même niveau autour du collier (1) et que la surface intérieure du collier (1) peut être positionnée au même niveau que la paroi de cadre de moule latéral (19) et est essentiellement hermétique à la matière par rapport à la matière de moulage par injection (38).

14. Système de forme de moulage par injection selon l'une quelconque des revendications 12 ou 13, dans lequel le collier (1) comprend
- une surface intérieure lisse et verticale (5) entourant directement un espace creux ouvert (2), dans lequel l'espace creux (2) comprend une hauteur verticale (6) et un contour sous la forme d'un contour de l'embase (3) ; dans lequel l'embase (3) et le collier (1), en particulier l'espace creux (2) du collier (1), se présentent sous la forme d'une chaussure et/ou d'une semelle de chaussure,
- une surface extérieure (7), dans lequel la surface extérieure (7) est de préférence légèrement incurvée à l'extérieur depuis le rebord (9) du collier (1) jusqu'à un bord (15) du collier (1) au niveau de la transition inférieure de la surface extérieure (7) à la surface intérieure (5) et
- un rebord (9) au niveau de la transition supérieure de la surface intérieure (5) à la surface extérieure (7), dans lequel le rebord (9) comprend de préférence une surface régulière (11), qui est de préférence horizontale, et une transition arrondie (13) entre la surface régulière (11) et la surface extérieure (7) .

15. Système de forme de moulage par injection selon l'une quelconque des revendications 12 à 14,
dans lequel le collier (1) et l'embase (3) sont montés ou conçus pour être montés pour pouvoir se déplacer l'un par rapport à l'autre et sont conçus pour un déplacement vertical entre une première (4) et une seconde position,
dans lequel dans la première position (4), une distance entre le rebord (9) du collier (1) et l'embase (3) est maximale, de préférence pour l'injection d'une matière de moulage par injection (38), et
dans lequel, dans la seconde position, la distance entre le rebord (9) du collier (1) et l'embase (3) est minimale, dans lequel le rebord (9) et l'embase (9) sont de préférence au même niveau.

16. Système de forme de moulage par injection selon la revendication précédente, dans lequel le collier (1) comprend une ouverture pour une carotte (17), de préférence au niveau du rebord (9) du collier (1), et dans lequel l'ouverture pour une carotte (17) est située entre le rebord (9) du collier (1) et l'embase (3), lorsque le collier (1) et l'embase (3) sont dans la première position (4).

17. Système de forme de moulage par injection selon l'une quelconque des revendications 10 à 16, comprenant également :
a. un dispositif d'activation thermique de la feuille (34) et/ou d'un élément inséré placé à l'intérieur du système de forme, de préférence un chauffage et/ou une lampe,
b. un moyen pour positionner la feuille (34), de préférence un élément de fixation (36), à l'extérieur du cadre de moule latéral, positionnant ainsi la feuille (34) à l'intérieur de la cavité contre la paroi de cadre de moule latéral (19) ou à proximité de celle-ci,
c. au moins un dispositif de déroulement configuré pour maintenir un rouleau de feuille (34) et une lame, dans lequel le dispositif de déroulement et la lame sont conçus pour dérouler automatiquement un rouleau de feuille (34) au moins partiellement, pour couper automatiquement la feuille (34) et positionner la feuille (34) dans le moule latéral en position ouverte, et/ou
d. un dispositif d'impression pour impression sur la feuille (34), de préférence par impression laser, impression sans impact et/ou tampographie.
